(19) Europäisches Patentamt
European Patent Office
Office européen des brevets

(11) EP 4 421 120 A1

(12) **EUROPEAN PATENT APPLICATION**
published in accordance with Art. 153(4) EPC

(43) Date of publication:
**28.08.2024 Bulletin 2024/35**

(21) Application number: **22883676.3**

(22) Date of filing: **21.10.2022**

(51) International Patent Classification (IPC):
***C08L 27/06*** *(2006.01)* ***A61L 33/06*** *(2006.01)*
***C08F 265/06*** *(2006.01)* ***C08L 51/00*** *(2006.01)*
***C08L 53/00*** *(2006.01)*

(52) Cooperative Patent Classification (CPC):
**A61L 33/06; C08F 265/06; C08L 27/06; C08L 51/00; C08L 53/00**

(86) International application number:
**PCT/JP2022/039414**

(87) International publication number:
**WO 2023/068375 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.10.2021 JP 2021173458**
**22.09.2022 JP 2022151815**

(71) Applicants:
- **Mitsubishi Chemical Corporation**
  **Chiyoda-ku**
  **Tokyo 100-8251 (JP)**
- **MCPP Innovation LLC**
  **Tokyo 100-8251 (JP)**

(72) Inventors:
- **FUKUTA Hiroki**
  **Tokyo 100-8251 (JP)**
- **OTANI Go**
  **Tokyo 100-8251 (JP)**
- **NISHIMURA Masanari**
  **Tokyo 100-8251 (JP)**
- **MIYAWAKI Kenji**
  **Tokyo 100-8251 (JP)**

(74) Representative: **TBK**
**Bavariaring 4-6**
**80336 München (DE)**

(54) **RESIN COMPOSITION, PRODUCTION METHOD OF RESIN COMPOSITION, MOLDING MATERIAL AND ARTICLE**

(57) According to the present invention, there is provided a resin composition containing a vinyl chloride-based polymer (A1), a plasticizer (A2), and a (meth)acrylic copolymer (B), in which the (meth)acrylic copolymer (B) is a block copolymer or a graft copolymer, which contains a monomer unit (b1) represented by Formula (1). The resin composition is suitable for manufacturing an article to which proteins do not adhere easily but which comes in contact with proteins.

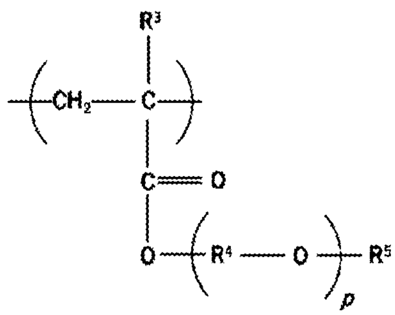

(1)

EP 4 421 120 A1

FIG. 1

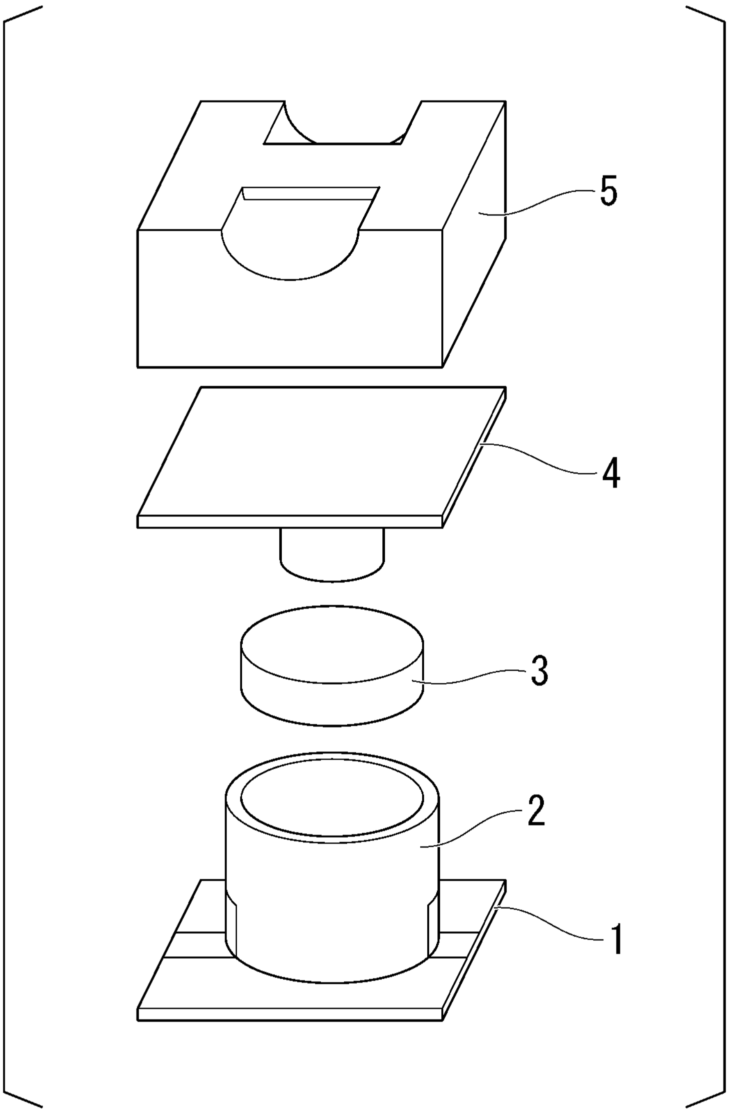

## Description

[Technical Field]

The present invention relates to a resin composition, a production method of a resin composition, a molding material, and an article.

Priorities are claimed on Japanese Patent Application No. 2021-173458 filed October 22, 2021, and Japanese Patent Application No. 2022-151815 filed September 22, 2022, the contents of which are incorporated herein by reference.

[Background Art]

In recent years, in fields of medical instruments, biochemical analysis, or protein separation and purification, various polymer materials (polystyrene, polypropylene, polyethylene, polyurethane, polyvinyl chloride, polymethyl methacrylate, and nylon), glass, or metals such as stainless steel have been used for various component parts such as various reaction vessels, centrifuge tubes, tubes, syringes, pipettes, filters, and separation columns, containers, and the like. However, protein adhesion occurs in any materials described above, which is a cause of the low reproducibility of detection sensitivity or poor purification.

In addition, artificial organs such as a catheter, a cannula, a stent, a plasma separation membrane, and an artificial heart and lung come in contact with circulating blood and metabolites in the body. As a result, there is a need for biocompatibility that suppresses the formation of a thrombus or the like, which is caused by the protein adhesion or the plasma protein adhesion.

Patent Document 1 describes that polymethoxyethyl acrylate (PMEA) has biocompatibility such as antithrombogenicity and suppression of protein adhesion. Patent Document 2 describes a method of obtaining a film to which a platelet does not easily adhere, by heat-treating a coating film obtained from a blending solution of polymethyl methacrylate (PMMA) and PMEA and exposing the coating film to ultrapure water.

[Citation List]

[Patent Documents]

[Patent Document 1]
Japanese Unexamined Patent Application, First Publication No. 2004-161954
[Patent Document 2]
Japanese Unexamined Patent Application, First Publication No. 2013-121430

[Summary of Invention]

[Technical Problem]

However, the PMEA disclosed in Patent Document 1 has a very low glass transition temperature of about -50°C. Therefore, in terms of handleability, it is difficult to use PMEA as it is, which is a highly viscous liquid at ordinary temperature, as an additive to be added to a molding material. Further, in a molded product produced using a molding material containing PMEA as an additive, there are also concerns of bleeding out and/or falling of PMEA from the molded product. In addition, when it is used for a coating material, it is difficult for the coating film to obtain sufficient strength and hardness, and thus it is difficult to ensure practicability.

In addition, the method disclosed in Patent Document 2 has a drawback in that the production step is complicated and the processing time is long.

An object of the present invention is to provide a resin composition which is suitable for producing an article to which proteins do not adhere easily but which comes in contact with proteins, a production method of a resin composition, a molding material, and an article.

[Solution to Problem]

The present invention has the following aspects.

[1] A resin composition containing:

a vinyl chloride-based polymer (A1);
a (meth)acrylic copolymer (B); and
a plasticizer (A2),
in which the (meth)acrylic copolymer (B) is a block copolymer or a graft copolymer, which contains a monomer unit (b1) represented by Formula (1),

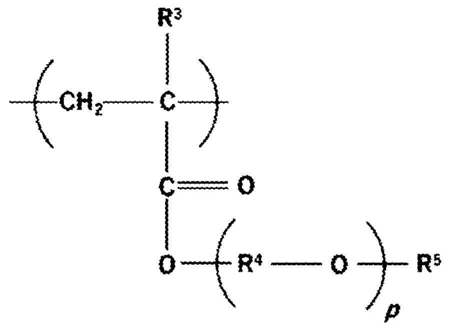

(1)

(in Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10).

[2] The resin composition according to [1], in which a proportion of the (meth)acrylic copolymer (B) in 100% by mass of a total of the resin composition is 20% by mass or less.
[3] The resin composition according to [1] or [2], in which a proportion of the (meth)acrylic copolymer (B) in 100% by mass of a total of the resin composition is 10% by mass or less.
[4] The resin composition according to any one of [1] to [3], in which the (meth)acrylic copolymer (B) is a block copolymer or a graft copolymer, which contains a polymer (B1) and a polymer (B2).
[5] The resin composition according to [4], in which a proportion of the monomer unit (b1) in a 100% by mass of a total of monomer units contained in the polymer (B1) is 70% by mass or more.
[6] The resin composition according to [4] or [5], in which a proportion of the monomer unit (b1) in a 100% by mass of a total of monomer units contained in the polymer (B1) is 90% by mass or more.
[7] The resin composition according to any one of [4] to [6], in which the monomer unit (b1) is a monomer unit derived from at least one monomer selected from the group consisting of methoxymethyl acrylate, methoxyethyl acrylate, methoxypropyl acrylate, methoxybutyl acrylate, methoxy polyethylene glycol acrylate, methoxymethyl methacrylate, methoxyethyl methacrylate, methoxypropyl methacrylate, methoxybutyl methacrylate, and methoxy polyethylene glycol methacrylate.
[8] The resin composition according to any one of [4] to [7], in which a glass transition point (Tg) of the polymer (B2) is 50°C to 150°C.
[9] The resin composition according to any one of [4] to [8], in which the polymer (B2) consists of a monomer unit (b2), and
the monomer unit (b2) is a monomer unit derived from at least one monomer selected from the group consisting of hydrocarbon group-containing (meth)acrylates in which a hydrocarbon group has 1 to 12 carbon atoms.
[10] The resin composition according to any one of [4] to [9], in which the polymer (B2) consists of a monomer unit (b2), and
the monomer unit (b2) includes a monomer unit derived from methyl methacrylate.
[11] The resin composition according to any one of [1] to [10], in which the polymer (B2) contains a unit derived from a macromonomer represented by Formula (2),

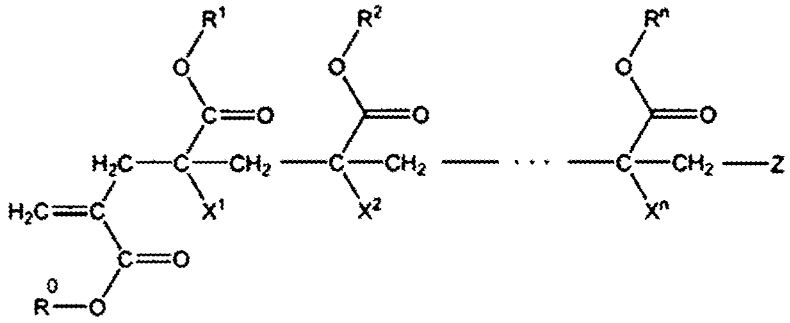

(2)

(in Expression (2), $R^0$ to $R^n$ each independently represent a hydrogen atom, an alkyl group which is unsubstituted or has a substituent, an alicyclic group which is unsubstituted or has a substituent, an aryl group which is unsubstituted or has a substituent, a heteroaryl group which is unsubstituted or has a substituent, or a non-aromatic heterocyclic group which is unsubstituted or has a substituent, where a plurality of $R^0$ to $R^n$ may be the same or different from each other, $X^1$ to $X^n$ represent a hydrogen atom or a methyl group, where a plurality of $X^1$ to $X^n$ may be the same or different from each other, Z is a terminal group, and n is a natural number of 2 to 10,000).

[12] The resin composition according to any one of [1] to [11] in which the plasticizer (A2) is at least one selected from the group consisting of a phthalic acid-based compound, a terephthalic acid-based compound, a trimellitic acid-based compound, a cyclohexanedicarboxylic acid ester-based compound, a phosphoric acid-based compound, an adipic acid-based compound, a citric acid-based compound, an ether-based compound, and a polyester-based compound.

[13] The resin composition according to any one [1] to [12] in which the plasticizer (A2) is at least one selected from the group consisting of bis(2-ethylhexyl) phthalate, bis(2-ethylhexyl) terephthalate, tris(2-ethylhexyl) trimellitate, and diisononyl cyclohexane-1,2-dicarboxylate.

[14] The resin composition according to any one of [1] to [13] in which the plasticizer (A2) includes diisononyl cyclohexane-1,2-dicarboxylate.

[15] The resin composition according to any one of [1] to [14], further containing:

a stabilizer (A3),
in which the stabilizer (A3) is at least one selected from the group consisting of a calcium-zinc-based stabilizer and an epoxidized vegetable oil.

[16] The resin composition according to any one of [1] to [15], in which a haze value of a 1 mm thick sheet, which is measured in accordance with Japanese Industrial Standards JIS K 7136: 2000, is less than 50%.

[17] The resin composition according to any one of [1] to [16], further containing:

a (meth)acrylic polymer (P) different from the (meth)acrylic copolymer (B),
in which a proportion of the (meth)acrylic polymer (P) with respect to 100 parts by mass of a total of the vinyl chloride-based polymer (A1), the (meth)acrylic copolymer (B), and the plasticizer (A2) is 0.1 parts by mass or more and 20 parts by mass or less,
a content of a methyl methacrylate unit in 100% by mass of a total of the (meth)acrylic polymer (P) is 50% by mass or more, and
a mass average molecular weight of the (meth)acrylic polymer (P) is 100,000 or more.

[18] The resin composition according to any one of [1] to [17], further containing:

anti-blocking particles (Q),
in which a proportion of the anti-blocking particles (Q) with respect to 100 parts by mass of the (meth)acrylic copolymer (B) is 0.1 parts by mass or more and 20 parts by mass or less, and
a median diameter of the anti-blocking particles (Q), which is measured using a particle size distribution analyzer, is 35% or less of a median diameter of the (meth)acrylic copolymer (B).

[19] A resin composition containing:

a (meth)acrylic copolymer (B); and

anti-blocking particles (Q),
in which the (meth)acrylic copolymer (B) is a block copolymer or a graft copolymer, which contains a polymer (B1) and a polymer (B2), where the polymer (B1) contains a monomer unit (b1) represented by Formula (1),
a proportion of the anti-blocking particles (Q) is 0.1 parts by mass or more and 20 parts by mass or less with respect to 100 parts by mass of the (meth)acrylic copolymer (B), and
a median diameter of the anti-blocking particles (Q), which is measured using a particle size distribution analyzer, is 35% or less of a median diameter of the (meth)acrylic copolymer (B),

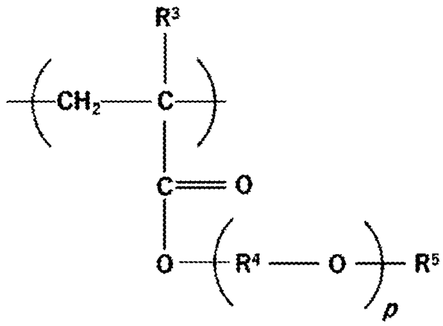

(1)

(in Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10).

[20] A production method of a resin composition containing a vinyl chloride-based polymer (A1), a plasticizer (A2), and a (meth)acrylic copolymer (B),

in which the (meth)acrylic copolymer (B) is a block copolymer or a graft copolymer, which contains a polymer (B1) and a polymer (B2), and
the polymer (B1) contains a monomer unit (b1) represented by Formula (1),

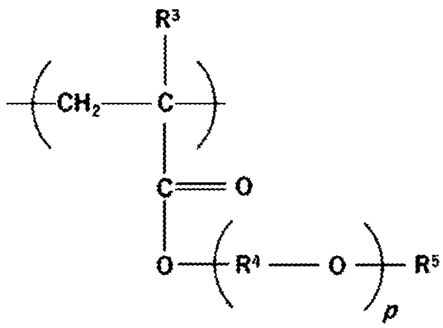

(1)

(in Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10).

[21] The production method of a resin composition according to [20], including the following step (1),
[Step (I)]
a step of mixing a resin composition containing the vinyl chloride-based polymer (A1) and the (meth)acrylic copolymer (B) at 150°C or higher.
[22] A molding material including the resin composition according to any one of [1] to [19].
[23] An article obtained by molding the molding material according to [22].
[24] The article according to [23], in which the article comes in contact with a plasma protein.

[Advantageous Effects of Invention]

According to the present invention, it is possible to provide a resin composition which is suitable for producing

an article to which proteins do not adhere easily but which comes in contact with proteins, a production method of a resin composition, a molding material, and an article.

The resin composition according to the present invention has an effect of suppressing protein adhesion and is suitable for producing an article that comes in contact with a protein. The resin composition according to the present invention is obtained by adding a (meth)acrylic block copolymer and/or a (meth)acrylic graft copolymer to a polyvinyl chloride-based resin. A molding material that uses the resin composition according to the present invention and a molded product produced by using the molding material achieve, in particular, a member made of polyvinyl chloride having antithrombogenicity.

[Brief Description of Drawings]

FIG. 1 is a view showing an instrument for preparing a sample for blocking resistance evaluation.

[Description of Embodiments]

The definitions of the following terms apply throughout the present specification and the scope of the present patent claims.

The "(meth)acrylic monomer" means a monomer having a (meth)acryloyl group. The "(meth)acryloyl group" is a general term for an acryloyl group and a methacryloyl group. The "(meth)acrylate" is a general term for an acrylate and a methacrylate.

The "(meth)acrylic acid" is a general term for acrylic acid and methacrylic acid.

"to" indicating a numerical range means that the numerical values described before and after "to" are included as the lower limit value and the upper limit value.

Hereinafter, embodiments of the present invention will be described. The following embodiments are merely exemplary to describe the present invention and are not intended to limit the present invention only to these embodiments. It is possible to implement the present invention in various aspects as long as the various aspects do not depart from the gist of the present invention.

[Resin composition]

A first embodiment of the resin composition according to the present invention is a resin composition containing a vinyl chloride-based polymer (A1), a plasticizer (A2), and a (meth)acrylic copolymer (B).

<Vinyl chloride-based polymer (A1)>

The resin composition according to the present invention contains a vinyl chloride-based polymer (A1) as an essential component.

The vinyl chloride-based polymer (A1) is not particularly limited as long as it is a polymer containing a vinyl chloride monomer unit. However, non-limited examples of the vinyl chloride-based polymer (A1) include a homopolymer of vinyl chloride (polyvinyl chloride), a post chlorinated vinyl chloride polymer (chlorinated polyvinyl chloride), a partially crosslinked vinyl chloride polymer (crosslinked polyvinyl chloride), and a copolymer of a vinyl compound, which is copolymerizable with vinyl chloride, and vinyl chloride (a vinyl chloride copolymer).

The average chlorine content of the vinyl chloride-based polymer (A1) is not particularly limited; however, it is preferably 56% to 75% by mass of the total mass of the vinyl chloride-based polymer (A1).

The vinyl chloride-based polymer (A1) is preferably at least one selected from a vinyl chloride-based polymer having an average chlorine content of 56% to 75% by mass and a vinyl chloride-based polymer obtained by copolymerizing a vinyl chloride-based copolymer with an elastic body and/or an elastomer.

In the vinyl chloride-based copolymer, mechanical characteristics decrease as the content of constitutional units other than the vinyl chloride monomer unit increases. Therefore, the vinyl chloride monomer unit contained in the vinyl chloride-based copolymer is preferably 70% by mass or more of the total mass of the vinyl chloride-based copolymer.

In the vinyl chloride-based copolymer, the vinyl monomer other than the vinyl chloride copolymerizable with vinyl chloride may be any monomer having a reactive double bond in the molecule (however, vinyl chloride is excluded). Non-limited examples of such vinyl monomers include α-olefins such as ethylene, propylene, and butylene; vinyl esters such as vinyl acetate and vinyl propionate; vinyl ethers such as butyl vinyl ether and cetyl vinyl ether; unsaturated carboxylic acids such as acrylic acid and methacrylic acid; (meth)acrylic acid esters such as methyl (meth)acrylate, ethyl (meth)acrylate, and phenyl (meth)acrylate; aromatic vinyls such as styrene and α-methylstyrene; halogenated vinyls such as vinylidene chloride and vinyl fluoride (excluding vinyl chloride); and N-substituted maleimides such as N-phenylmaleimide and N-cyclohexylmaleimide.

In the vinyl chloride-based copolymer, one kind of the vinyl monomer other than the vinyl chloride copolymerizable with vinyl chloride can be used alone, or two or more kinds thereof can be used in combination.

An average degree of polymerization of the vinyl chloride-based polymer (A1) is not particularly limited; however, it is preferably 300 to 5,000 and more preferably 500 to 3,000. When the average degree of polymerization of the vinyl chloride-based polymer (A1) is 300 or more, the mechanical properties of the article (molded product) obtained by molding a molding material containing the resin composition according to the present invention are more favorable. In addition, when the average degree of polymerization of the vinyl chloride-based polymer (A1) is 5,000 or less, the processability of the resin composition according to the present invention is more favorable.

A production method of the vinyl chloride-based polymer (A1) is not particularly limited, and it can be produced by any method such as an emulsion polymerization method, a suspension polymerization method, a solution polymerization method, or a bulk polymerization method.

In the resin composition according to the present invention, one kind of the vinyl chloride-based polymer (A1) can be used alone, or two or more kinds thereof can be used in combination.

<Plasticizer (A2)>

The resin composition according to the present invention contains a plasticizer (A2) as an essential component.

The plasticizer (A2) is not particularly limited as long as the miscibility and compatibility with the vinyl chloride-based polymer (A1) described are favorable, and a plasticizer known in the related art can be appropriately selected and used. Non-limited examples of such plasticizers include a phthalic acid-based compound, a terephthalic acid-based compound, a trimellitic acid-based compound, a cyclohexanedicarboxylic acid ester-based compound, a phosphoric acid-based compound, an adipic acid-based compound, a citric acid-based compound, an ether-based compound, and a polyester-based compound.

Examples of the phthalic acid-based compound include a dialkyl phthalate such as bis(2-ethylhexyl) phthalate, dioctyl phthalate, diisononyl phthalate, or diisodecyl phthalate; an alkyl benzyl phthalate such as butyl benzyl phthalate; an alkyl aryl phthalate; dibenzyl phthalate; and a diaryl phthalate.

Examples of the terephthalic acid-based compound include bis(2-ethylhexyl) terephthalate.

Examples of the trimellitic acid-based compound include a trialkyl trimellitic acid such as tris(2-ethylhexyl) trimellitate.

Examples of the cyclohexanedicarboxylic acid ester-based compound include diisononyl cyclohexane-1,2-dicarboxylate.

Examples of the phosphoric acid-based compound include a triaryl phosphate such as tricresyl phosphate; a trialkyl phosphate; and an alkyl aryl phosphate.

Examples of the adipic acid-based compound include an adipic acid ester.

Examples of the citric acid-based compound include a citric acid ester such as tributyl acetyl citrate.

Examples of the ether-based compound include polyalkylene glycols such as polyethylene glycol and polypropylene glycol.

Examples of the polyester-based compound include polyesters of dibasic acids such as adipic acid, sebacic acid, or phthalic acid, and glycols such as 1,2-propanediol or butanediol.

The plasticizer (A2) is preferably at least one selected from the group consisting of a phthalic acid-based compound, a terephthalic acid-based compound, a trimellitic acid-based compound, a cyclohexanedicarboxylic acid ester-based compound, a phosphoric acid-based compound, an adipic acid-based compound, a citric acid-based compound, an ether-based compound, and a polyester-based compound, more preferably at least one selected from the group consisting of bis(2-ethylhexyl) phthalate, bis(2-ethylhexyl) terephthalate, tris(2-ethylhexyl) trimellitate, and diisononyl cyclohexane-1,2-dicarboxylate, and still more preferably diisononyl cyclohexane-1,2-dicarboxylate from the viewpoint of the transparency, low migration properties to other resins, and the like of an article (molded product) obtained by molding a molding material containing the resin composition according to the present invention.

In the resin composition according to the present invention, one kind of the plasticizer (A2) can be used alone, or two or more kinds thereof can be used in combination.

In the resin composition according to the present invention, the content of the plasticizer (A2) is not particularly limited. In the resin composition according to the present invention, the content of the plasticizer (A2) is preferably 10 to 150 parts by mass and more preferably 30 to 150 parts by mass with respect to 100 parts by mass of the vinyl chloride-based polymer (A1). In the resin composition according to the present invention, when the content of the plasticizer (A2) is 10 parts by mass or more with respect to 100 parts by mass of the vinyl chloride-based polymer (A1), the interaction between the polymer chains of the vinyl chloride-based polymer (A1) is sufficiently inhibited, and the distance between the polymer chains of the vinyl chloride-based polymer (A1) is sufficiently widened, whereby flexibility can be further imparted. In addition, in the resin composition according to the present invention, when the content of the plasticizer (A2) is 150 parts by mass or less with respect to 100 parts by mass of the vinyl chloride-based polymer (A1), it is possible

to prevent the deterioration of the mechanical properties, flame retardancy, and electrical characteristics of the resin composition according to the present invention.

<Stabilizer (A3)>

The resin composition according to the present invention may contain a stabilizer (A3) as a component other than the vinyl chloride-based polymer (A1), the plasticizer (A2), and the (meth)acrylic copolymer (B).
The stabilizer refers to an auxiliary agent that imparts thermal and chemical stability to the vinyl chloride-based polymer (A1) contained in the resin composition according to the present invention during molding processing and during being used as an article.
Non-limited examples of the stabilizer (A3) include lead-based stabilizers such as a tribasic lead sulfate, a dibasic lead phosphite, a basic lead sulfite, and lead silicate; a metal soap-based stabilizer derived from a metal such as potassium, magnesium, barium, zinc, cadmium, or lead and a fatty acid such as 2-ethylhexanoic acid, lauric acid, myristic acid, palmitic acid, stearic acid, isostearic acid, hydroxy stearic acid, oleic acid, ricinoleic acid, linoleic acid, or behenic acid; an organic tin-based stabilizer having an alkyl group, an ester group, a fatty acid group, a maleic acid group, or a sulfide-containing group; composite metal soap-based stabilizers which are, for example, Ba-Zn-based, Ca-Zn-based, Ba-Ca-Sn-based, Ca-Mg-Sn-based, Ca-Zn-Sn-based, Pb-Sn-based, Pb-Ba-Ca-based; metal salt-based stabilizers derived from a metal group such as barium or zinc, and, in general, two or more kinds of organic acids such as a branched fatty acids such as 2-ethylhexanoic acid, isodecanoic acid, or a trialkyl acetic acid, an unsaturated fatty acid such as oleic acid, ricinoleic acid, or linoleic acid, an alicyclic acid such as naphthenic acid, and an aromatic acid such as carbolic acid, benzoic acid, salicylic acid, or a substituted derivative thereof; and metallic stabilizers such as metal salt liquid stabilizers which are obtained by dissolving these stabilizers in an organic solvent such as a petroleum-based hydrocarbon, alcohol, or a glycerol derivative, and then blending a stabilizing auxiliary agent such as a phosphorous acid ester, a color development inhibitor, a transparency improver, a light stabilizer, an antioxidant, a bleeding-out inhibitor, or a lubricant, as well as non-metallic stabilizers such as an epoxy compound such as an epoxy resin, an epoxidized vegetable oil, or an epoxidized fatty acid alkyl ester, and an organic phosphorous acid ester.
In the resin composition according to the present invention, one kind of the stabilizer (A3) can be used alone, or two or more kinds thereof can be used in combination.
The stabilizer (A3) is preferably a composite metal soap-based stabilizer since it has an excellent effect as a stabilizer. The composite metal soap-based stabilizer is preferably a Ca-Zn-based stabilizer from the viewpoint that it does not contain harmful heavy metals.
The Ca-Zn-based stabilizer is a mixture of a fatty acid salt of calcium and a fatty acid salt of zinc. Examples of the fatty acid constituting the fatty acid salt include behenic acid, stearic acid, lauric acid, oleic acid, palmitic acid, ricinoleic acid, and benzoic acid. One kind of the fatty acid can be used alone, or two or more kinds thereof can be used in combination.
In the Ca-Zn-based stabilizer, the ratio of zinc to calcium is preferably 1:2 to 1:3 in terms of the mass ratio between elements. In the Ca-Zn-based stabilizer, in a case where the ratio of zinc to calcium is less than 2, reddishness peculiar to a calcium salt tends to be exhibited. In the Ca-Zn-based stabilizer, in a case where the ratio of zinc to calcium is more than 3, the zinc chloride generated during the molding processing serves as a decomposition catalyst of the vinyl chloride-based polymer (A1), which may cause rapid blackening, which is generally referred to as "zinc burning", and decomposition.
In the resin composition according to the present invention, one kind of the composite metal soap-based stabilizer can be used alone, or two or more kinds thereof can be used in combination.
The stabilizer (A3) is preferably an epoxy compound due to the fact that the stabilizer (A3) has low volatility.
Examples of the epoxy compound include epoxidized vegetable oils such as an epoxidized soybean oil, an epoxidized linseed oil, an epoxidized cotton seed oil, an epoxidized peanut oil, an epoxidized safflower oil, an epoxidized grape seed oil, and an epoxidized olive oil. The epoxidized vegetable oil is preferably an epoxidized soybean oil in terms of ease of availability.
In the resin composition according to the present invention, one kind of the epoxy compound can be used alone, or two or more kinds thereof can be used in combination.
In the resin composition according to the present invention, it is preferable to use the composite metal soap-based stabilizer and the epoxy compound in combination due to the fact that the effect of improving heat stability is excellent.
In the resin composition according to the present invention, the content of the stabilizer (A3) is not particularly limited; however, it is preferably 1 to 15 parts by mass and more preferably 1 to 8 parts by mass with respect to 100 parts by mass of the vinyl chloride-based polymer (A1).
In the resin composition according to the present invention, when the content of the stabilizer (A3) is 1 part by mass or more with respect to 100 parts by mass of the vinyl chloride-based polymer (A1), it is possible to suppress the

thermal decomposition during processing.

In addition, in the resin composition according to the present invention, when the content of the stabilizer (A3) is 15 parts by mass or less with respect to 100 parts by mass of the vinyl chloride-based polymer (A1), it is possible to prevent the deterioration of the mechanical properties of the molded product.

Further, in the resin composition according to the present invention, the content of the composite metal soap-based stabilizer is not particularly limited; however, it is preferably 1 to 14 parts by mass and more preferably 1 to 7 parts by mass with respect to 100 parts by mass of the vinyl chloride-based polymer (A1).

In the resin composition according to the present invention, when the content of the composite metal soap-based stabilizer is 1 part by mass or more with respect to 100 parts by mass of the vinyl chloride-based polymer (A1), it is possible to suppress the thermal decomposition during processing.

In addition, in the resin composition according to the present invention, when the content of the composite metal soap-based stabilizer is 14 parts by mass or less with respect to 100 parts by mass of the vinyl chloride-based polymer (A1), it is possible to prevent the deterioration of the mechanical properties of the molded product.

Further, in the resin composition according to the present invention, the content of the epoxy compound is not particularly limited; however, it is preferably 1 to 14 parts by mass and more preferably 1 to 7 parts by mass with respect to 100 parts by mass of the vinyl chloride-based polymer (A1).

In the resin composition according to the present invention, when the content of the epoxy compound is 1 part by mass or more with respect to 100 parts by mass of the vinyl chloride-based polymer (A1), it is possible to suppress the thermal decomposition during processing.

In addition, in the resin composition according to the present invention, when the content of the epoxy compound is 14 parts by mass or less with respect to 100 parts by mass of the vinyl chloride-based polymer (A1), it is possible to prevent the deterioration of the mechanical properties of the molded product.

<(Meth)acrylic copolymer (B)>

The resin composition according to the present invention contains a (meth)acrylic copolymer (B) as an essential component.

The (meth)acrylic copolymer (B) is a block copolymer or a graft copolymer, which contains a monomer unit (b1) represented by Formula (1).

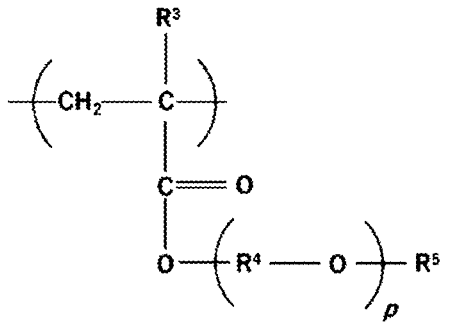

(1)

In Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10.

The block and/or the graft structure which is a structure of the (meth)acrylic copolymer (B) may be any structure of a diblock, a triblock, a multiblock, a graft, a ring shape, a star shape, a comb shape, a dedritic shape, or a ladder shape, or may be a structure obtained by combining a plurality of these structures. Among these structures, it is preferable to include at least any one structure of a diblock, a triblock, or a graft due to the fact that the ability to suppress the protein adhesion to the surface of the molded product can be expected and that the production is relatively easy.

In the resin composition according to the present invention, one kind of the (meth)acrylic copolymer (B) can be used alone, or two or more kinds thereof can be used in combination.

In the resin composition according to the present invention, the content of the (meth)acrylic copolymer (B) is not particularly limited. The content of the (meth)acrylic copolymer (B) in the resin composition according to the present invention is preferably 90% by mass or less, more preferably 50% by mass or less, still more preferably 20% by mass or less, and even still more preferably 10% by mass or less, with respect to 100% by mass of a total of the resin composition according to the present invention. When the content of the (meth)acrylic copolymer (B) is 90% by mass or less with respect to 100% by mass of a total of the resin composition according to the present invention, it is possible

to further suppress the deterioration of the mechanical properties of the molded product that uses the resin composition of the present invention. In addition, the content of the (meth)acrylic copolymer (B) in the resin composition according to the present invention is preferably 1% by mass or more, more preferably 3% by mass or more, still more preferably 5% by mass or more, and even still more preferably 7% by mass or more, with respect to 100% by mass of a total of the resin composition according to the present invention. When the content of the (meth)acrylic copolymer (B) is 1% by mass or more with respect to 100% by mass of a total of the resin composition according to the present invention, it is possible to impart a more favorable protein adhesion suppressing ability to an article that uses the resin composition according to the present invention.

In addition, the (meth)acrylic copolymer (B) preferably has at least any structure of a (meth)acrylic block copolymer and/or a (meth)acrylic graft copolymer. The (meth)acrylic block copolymer and the (meth)acrylic graft copolymer may be described as a (meth)acrylic block and graft copolymer or a (meth)acrylic block/graft copolymer.

The (meth)acrylic copolymer (B) is preferably a block copolymer or a graft copolymer, which contains a polymer (B1) and a polymer (B2).

(Polymer (B1))

In the (meth)acrylic copolymer (B), the polymer (B1) mainly has an effect of suppressing protein adhesion.

· Monomer unit (b1)

The polymer (B1) preferably contains a monomer unit (b1) represented by Formula (1) as a monomer unit.

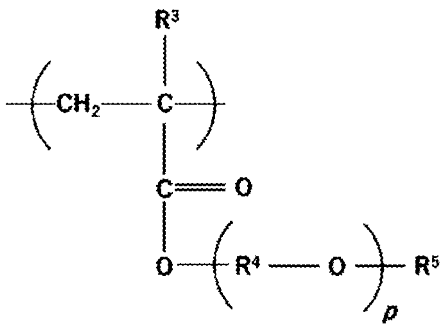

(1)

In Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10.

The monomer unit (b1) is a monomer unit derived from a monomer (b'1).

Non-limited examples of the monomer (b'1) include methoxymethyl acrylate, methoxyethyl acrylate, methoxypropyl acrylate, methoxybutyl acrylate, ethoxymethyl acrylate, ethoxyethyl acrylate, ethoxypropyl acrylate, ethoxybutyl acrylate, propoxymethyl acrylate, propoxyethyl acrylate, propoxypropyl acrylate, propoxybutyl acrylate, butoxymethyl acrylate, butoxyethyl acrylate, butoxypropyl acrylate, butoxybutyl acrylate, methoxymethyl methacrylate, methoxyethyl methacrylate, methoxypropyl methacrylate, methoxybutyl methacrylate, ethoxymethyl methacrylate, ethoxyethyl methacrylate, ethoxypropyl methacrylate, ethoxybutyl methacrylate, propoxymethyl methacrylate, propoxyethyl methacrylate, propoxypropyl methacrylate, propoxybutyl methacrylate, butoxymethyl methacrylate, butoxyethyl methacrylate, butoxypropyl methacrylate, and butoxybutyl methacrylate, "BLEMMER PME-100" (methoxy polyethylene glycol methacrylate (having two ethylene glycol chains) manufactured by NOF Corporation, product name)), and "BLEMMER PME-200" (methoxy polyethylene glycol methacrylate (having four ethylene glycol chains) manufactured by NOF Corporation, product name)).

In terms of the suppression of protein adhesion, the monomer (b'1) is preferably at least one selected from the group consisting of methoxymethyl acrylate, methoxyethyl acrylate, methoxypropyl acrylate, methoxybutyl acrylate, methoxy polyethylene glycol acrylate, methoxymethyl methacrylate, methoxyethyl methacrylate, methoxypropyl methacrylate, methoxybutyl methacrylate, and methoxy polyethylene glycol methacrylate, more preferably at least one selected from the group consisting of methoxyethyl acrylate, methoxypropyl acrylate, methoxy polyethylene glycol acrylate, and methoxy polyethylene glycol methacrylate, and still more preferably at least one selected from the group consisting of methoxyethyl acrylate and methoxyethyl methacrylate.

One kind of the monomer (b'1) can be used alone, or two or more kinds thereof can be used in combination.

The reason why the polymer (B1) containing the monomer unit (b1) has the protein adhesion suppressing

ability is conceived as follows. As the water that hydrates the surface of a macromolecule, free water that weakly interacts with the macromolecule, intermediate water that intermediately interacts with the macromolecule, and antifreeze water that strongly interacts with the macromolecule are known. It is considered that in a case where intermediate water is present on the surface of a macromolecule, a protein is difficult to adhere to the surface of the macromolecule, and as a result, the protein adhesion suppressing ability is imparted. In order for the intermediate water to be present on the surface of the macromolecule, it is considered to be effective to contain the monomer unit (b1) represented by Formula (1), and among the above, a monomer unit based on methoxyethyl acrylate or methoxyethyl methacrylate is considered to be particularly effective.

The degree of polymerization of the monomer unit (b1) in the polymer (B1) is preferably a natural number of 1 to 1,000,000, and it is more preferably a natural number of 2 to 100,000 and still more preferably a natural number of 5 to 50,000 in terms of the suppression of protein adhesion. When the degree of polymerization is 1 or more, the effect of suppressing protein adhesion is more excellent. In addition, when the degree of polymerization is 1,000,000 or less, the moldability is more excellent.

The polymer (B1) may contain a monomer unit other than the monomer unit (b1).

The constitutional unit other than the monomer unit (b1) is a monomer unit derived from a monomer other than the monomer (b'1).

The monomer other than the monomer (b'1) can be selected from known monomers without particular limitation as long as it has copolymerizability with the monomer (b'1).

Examples of the monomer other than the monomer (b'1) include various radically polymerizable monomers.

The proportion of the monomer unit (b1) in the polymer (B1) is not particularly limited; however, it is preferably 40% by mass or more, more preferably 70% by mass or more, still more preferably 90% by mass or more, and particularly preferably 99% by mass or more, and it may be 100% by mass, with respect to 100% by mass of a total of constitutional units of the polymer (B1). When the content of the monomer unit (b1) is 40% by mass or more, an effect of suppressing protein adhesion is imparted.

· Monomer unit (b4)

The polymer (B1) may further contain a monomer unit (b4) as a monomer unit.

The monomer unit (b4) is a monomer unit derived from a monomer (b'4).

The monomer (b'4) can be selected from known monomers without particular limitation as long as it has copolymerizability with the monomer (b' 1).

Examples of the monomer (b'4) include various radically polymerizable monomers.

In the resin composition according to the present invention, in a case where the vinyl chloride-based polymer (A1), the plasticizer (A2), and the (meth)acrylic copolymer (B) are combined, the excellent low protein adsorptivity derived from the polymer (B1) is imparted to a surface of a molded product. When low protein adsorptivity is imparted to a surface of a molded product by using the properties of the polymer (B1), it is generally necessary to adopt such a method of applying a coating material consisting of the polymer (B1) onto the surface. That is, When the (meth)acrylic copolymer (B), which has both the polymer (B 1) and the polymer (B2), is used as an additive to impart a function to a surface of a molded product, it is expected to be necessary to add a large amount thereof.

However, as a result of diligent studies, the inventors of the present invention found that in a case of a combination of the vinyl chloride-based polymer (A1), the plasticizer (A2), and the (meth)acrylic copolymer (B), excellent low protein adsorptivity is exhibited even in a region in which the adding amount of the (meth)acrylic copolymer (B) is small, thereby completing the present invention. That is, in a case of a combination of the vinyl chloride-based polymer (A1), the plasticizer (A2), and the (meth)acrylic copolymer (B), it is considered that the polymer (B1) is specifically segregated on the surface, whereby the excellent low protein adsorption performance is exhibited.

(Polymer (B2))

In the (meth)acrylic copolymer (B), the polymer (B2) has an effect of imparting miscibility and compatibility with the vinyl chloride-based polymer (A1), and an effect of allowing the (meth)acrylic copolymer (B) to be handled as a solid.

The polymer (B2) alone has a glass transition point (Tg) of preferably 50°C or higher, more preferably 65°C or higher, still more preferably 80°C or higher, and even still more preferably 95°C or higher. When the Tg is 50°C or higher, the handleability of the obtained copolymer as a solid is more favorable. In addition, the polymer (B2) alone has a glass transition point (Tg) of preferably 150°C or lower, more preferably 130°C or lower, and still more preferably 110°C or lower. When the Tg is 150°C or lower, the compatibility between the obtained copolymer and the vinyl chloride-based polymer (A1), and the miscibility during the preparation of the resin composition according to the present invention are favorable.

Tg means a value calculated according to the Fox's calculation expression from the glass transition temperature

and the mass fraction of the homopolymer, which are described in the polymer handbook [Polymer Handbook, J. Brandrup, Interscience, 1989)]. The Fox's calculation expression is the following expression.

$$1/(273 + Tg) = \Sigma(Wi/(273 + Tgi))$$

In the expression, Wi represents a mass fraction of a monomer i, and Tgi represents a glass transition temperature (°C) of a homopolymer of the monomer i.

When a monomer is used, where a glass transition temperature of a homopolymer of the monomer is not described in "Polymer Handbook" described above, a value measured by a differential scanning calorimeter (DSC) is used for the Tg of the homopolymer.

· Monomer unit (b2)

The polymer (B2) preferably contains a monomer unit (b2) represented by Formula (3) as a monomer unit.

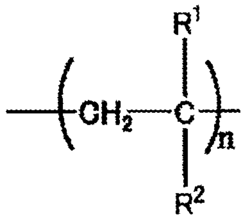

(3)

In Formula (3), $R^1$ represents a hydrogen atom or a methyl group, $R^2$ is an $OR^{33}$, a halogen atom, $COR^{34}$, $COOR^{35}$, CN, $CONR^{36}R^{37}$, or $R^{38}$, where $R^{33}$ to $R^{37}$ each independently represent a hydrogen atom, a substituted or unsubstituted alkyl group, a substituted or unsubstituted alicyclic group, a substituted or unsubstituted aryl group, a substituted or unsubstituted heteroaryl group, a substituted or unsubstituted non-aromatic heterocyclic group, a substituted or unsubstituted aralkyl group, a substituted or unsubstituted alkaryl group, or a substituted or unsubstituted organosilyl group, $R^{38}$ represents a substituted or unsubstituted aryl group or a substituted or unsubstituted heteroaryl group, and n is a natural number of 2 to 10,000.

The monomer unit (b2) is preferably a constitutional unit derived from a (meth)acrylic acid ester. $R^1$ is preferably a hydrogen atom or a methyl group, and $R^2$ is preferably $COOR^{35}$.

Examples of the unsubstituted alkyl group as $R^{33}$ to $R^{37}$ include a branched or linear alkyl group having 1 to 22 carbon atoms. Specific examples of the branched or linear alkyl groups having 1 to 22 carbon atoms include a methyl group, an ethyl group, an n-propyl group, an iso-propyl group, an n-butyl group, a tert-butyl group, an i-butyl group, a pentyl group (an amyl group), an i-pentyl group, a hexyl group, a heptyl group, a 2-ethylhexyl group, an octyl group, an i-octyl group, a nonyl group, an i-nonyl group, a decyl group, an i-decyl group, an undecyl group, a dodecyl group (a lauryl group), a tridecyl group, a tetradecyl group, a pentadecyl group, a hexadecyl group, a heptadecyl group, an octadecyl group (a stearyl group), an i-octadecyl group, a nonadecil group, an icosyl group, and a docosyl group.

Examples of the unsubstituted aryl group as $R^{33}$ to $R^{37}$ include an aryl group having 6 to 18 carbon atoms. Specific examples of the aryl group having 6 to 18 carbon atoms include a phenyl group and a naphthyl group.

Examples of the unsubstituted heteroaryl group as $R^{33}$ to $R^{37}$ include a heteroaryl group having 4 to 18 carbon atoms. Specific examples of the heteroaryl group having 4 to 18 carbon atoms include a pyridyl group and a carbazolyl group.

Examples of the unsubstituted non-aromatic heterocyclic group as $R^{33}$ to $R^{37}$ include a heterocyclic group having 4 to 18 carbon atoms. Specific examples of the heterocyclic group having 4 to 18 carbon atoms include oxygen atom-containing heterocyclic groups such as a tetrahydrofuryl group and a tetrahydropyranyl group, and nitrogen atom-containing heterocyclic groups such as a γ-butyrolactone group, an ε-caprolactone group, a pyrrolidinyl group, a pyrrolidone group, and a morpholino group.

Examples of the unsubstituted aralkyl group as $R^{33}$ to $R^{37}$ include a benzyl group and a phenylethyl group.

Examples of the unsubstituted organosilyl group as $R^{33}$ to $R^{37}$ include - $SiR^{17}R^{18}R^{19}$ (here, $R^{17}$ to $R^{19}$ each independently represent a substituted or unsubstituted alkyl group, a substituted or unsubstituted alicyclic group, or a substituted or unsubstituted aryl group).

Examples of the substituted or unsubstituted alkyl group as $R^{17}$ to $R^{19}$ include the same ones as those described above, and examples thereof include a methyl group, an ethyl group, an n-propyl group, an n-butyl group, an n-amyl group, an n-hexyl group, an n-octyl group, an n-dodecyl group, a stearyl group, a lauryl group, an isopropyl group, an

isobutyl group, an s-butyl group, a 2-methylisopropyl group, and a benzyl group.

Examples of the substituted or unsubstituted alicyclic group as $R^{17}$ to $R^{19}$ include the same ones as those described above, and examples thereof include a cyclohexyl group.

Examples of the substituted or unsubstituted aryl group as $R^{17}$ to $R^{19}$ include the same ones as those described above, and examples thereof include a phenyl group and a p-methylphenyl.

$R^{17}$ to $R^{19}$ may be the same or different from each other.

Examples of the substituent of $R^{33}$ to $R^{37}$ include at least one or more selected from the group consisting of an alkyl group (however, a case where $R^{33}$ to $R^{37}$ are an alkyl group having a substituent is excluded), an aryl group, $-COOR^{11}$, a cyano group, - $OR^{12}$, $-NR^{13}R^{14}$, $-CONR^{15}R^{16}$, a halogen atom, an allyl group, an epoxy group, a siloxy group, and a group exhibiting hydrophilicity or ionicity.

Here, $R^{11}$ to $R^{16}$ each independently represent a hydrogen atom, a substituted or unsubstituted alkyl group, a substituted or unsubstituted alicyclic group, or a substituted or unsubstituted aryl group).

Examples of the alkyl group and the aryl group in the substituent described above include the same ones as those each described as the unsubstituted alkyl group and the unsubstituted aryl group.

$R^{11}$ of $-COOR^{11}$ in the substituent described above is preferably a hydrogen atom or an unsubstituted alkyl group. That is, $-COOR^{11}$ is preferably a carboxy group or an alkoxycarbonyl group. Examples of the alkoxycarbonyl group include a methoxycarbonyl group.

$R^{12}$ of $-OR^{12}$ in the substituent described above is preferably a hydrogen atom or an unsubstituted alkyl group. That is, $-OR^{12}$ is preferably a hydroxy group or an alkoxy group. Examples of the alkoxy group include an alkoxy group having 1 to 12 carbon atoms, and specific examples thereof include a methoxy group.

Examples of the $-NR^{13}R^{14}$ in the substituent described above include an amino group, a monomethylamino group, and a dimethylamino group.

Examples of the $-CONR^{15}R^{16}$ in the substituent described above include a carbamoyl group ($-CONH_2$), an N-methylcarbamoyl group ($-CONHCH_3$), and an N,N-dimethylcarbamoyl group (a dimethylamide group: $-CON(CH_3)_2$).

Examples of the halogen atom in the substituent described above include a fluorine atom, a chlorine atom, a bromine atom, and an iodine atom.

Examples of the group exhibiting hydrophilicity or ionicity in the substituent described above include an alkali salt of a carboxy group or an alkali salt of a sulfo group, a poly(alkylene oxide) group such as a polyethylene oxide group or a polypropylene oxide group, and a cationic substituent such as a quaternary ammonium base.

The monomer unit (b2) is a monomer unit derived from a monomer (b'2).

Non-limited examples of the monomer (b'2) include the following monomers.

Hydrocarbon group-containing (meth)acrylic acid esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, isoamyl (meth)acrylate, hexyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, hexadecyl (meth)acrylate, stearyl (meth)acrylate, isostearyl (meth)acrylate, phenyl (meth)acrylate, benzyl (meth)acrylate, cyclohexyl (meth)acrylate, tetrahydrofurfuryl (meth)acrylate, isobornyl (meth)acrylate, 3,5,5-trimethylcyclohexyl (meth)acrylate, dicyclopentanyl (meth)acrylate, dicyclopentenyl (meth)acrylate, dicyclopentenyloxyethyl (meth)acrylate, terpene acrylate and a derivative thereof, a hydrogenated rosin acrylate and a derivative thereof, and docosyl (meth)acrylate.

Hydroxyl group-containing (meth)acrylic acid esters such as 2-hydroxyethyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, and glycerol (meth)acrylate.

Carboxyl group-containing vinyl monomers such as (meth)acrylic acid, 2-(meth)acryloyloxyethyl hexahydrophthalic acid, 2-(meth)acryloyloxypropyl hexahydrophthalic acid, 2-(meth)acryloyloxyethyl phthalic acid, 2-(meth)acryloyloxy propylphthalic acid, 2-(meth)acryloyloxyethyl maleic acid, 2-(meth)acryloyloxypropyl maleic acid, 2-(meth)acryloyloxyethyl succinic acid, 2-(meth)acryloyloxypropyl succinic acid, crotonic acid, fumaric acid, maleic acid, itaconic acid, citraconic acid, monomethyl maleate, monoethyl maleate, monooctyl maleate, monomethyl itaconate, monoethyl itaconate, monobutyl itaconate, monooctyl itaconate, monomethyl fumarate, monoethyl fumarate, monobutyl fumarate, monooctyl fumarate, and monoethyl citraconate.

Acid anhydride group-containing vinyl monomers such as maleic anhydride and itaconic anhydride.

Unsaturated dicarboxylic acid diester monomers such as dimethyl malate, dibutyl malate, dimethyl fumarate, dibutyl fumarate, dibutyl itaconate, and diperfluorocyclohexyl fumarate.

Epoxy group-containing vinyl monomers such as glycidyl (meth)acrylate, glycidyl $\alpha$-ethyl acrylate, and 3,4-epoxybutyl (meth)acrylate.

Amino group-containing (meth)acrylic acid ester-based vinyl monomers such as dimethylaminoethyl (meth)acrylate and diethylaminoethyl (meth)acrylate.

Vinyl monomers containing an amide group, such as (meth)acrylamide, dimethyl (meth)acrylamide, diethyl

(meth)acrylamide, N-tert-butyl (meth)acrylamide, N-methylol (meth)acrylamide, N-isopropyl acrylamide, hydroxyethyl acrylamide, N-methoxymethyl (meth)acrylamide, N-butoxymethyl (meth)acrylamide, diacetone acrylamide, maleic acid amide, and maleimide.

Vinyl monomers such as styrene, α-methyl styrene, vinyl toluene, (meth)acrylonitrile, vinyl chloride, vinyl acetate, and vinyl propionate.

Polyfunctional vinyl monomers such as divinyl benzene, ethylene glycol di(meth)acrylate, 1,3-butylene glycol di(meth)acrylate, 1,4-butanediol di(meth)acrylate, 1,6-hexanediol di(meth)acrylate, diethylene glycol di(meth)acrylate, triethylene glycol di(meth)acrylate, tetraethylene glycol di(meth)acrylate, polyethylene glycol di(meth)acrylate, tripropylene glycol di(meth)acrylate, neopentyl glycol di(meth)acrylate, 1,9-nonandiol di(meth)acrylate, 1,10-decanediol di(meth)acrylate, trimethylolpropane tri(meth)acrylate, pentaerythritol tetra(meth)acrylate, dipentaerythritol hexa(meth)acrylate, allyl (meth)acrylate, triallyl cyanurate, diallyl maleate, polypropylene glycol diallyl ether, and N,N'-methylene bis(meth)acrylamide.

Heterocyclic ring-based monomers such as (meth)acryloyl morpholine, vinyl pyrrolidone, vinyl pyridine, and vinyl carbazole.

Glycol ester-based monomers such as polyethylene glycol (meth)acrylate, polypropylene glycol (meth)acrylate, methoxyethyl (meth)acrylate, ethoxyethyl (meth)acrylate, n-butoxyethyl (meth)acrylate, isobutoxyethyl (meth)acrylate, t-butoxyethyl (meth)acrylate, ethoxyethoxyethyl (meth)acrylate, phenoxyethyl (meth)acrylate, nonylphenoxyethyl (meth)acrylate, 3-methoxybutyl (meth)acrylate, acetoxyethyl (meth)acrylate, " PLAXEL FM" (caprolactone-added monomer, manufactured by Daicel Corporation, product name), "BLEMMER PME-100" (methoxy polyethylene glycol methacrylate (having two ethylene glycol chains) manufactured by NOF Corporation, product name)), "BLEMMER PME-200" (methoxy polyethylene glycol methacrylate (having four ethylene glycol chains) manufactured by NOF Corporation, product name)), "BLEMMER PME-400" (methoxy polyethylene glycol methacrylate (having nine ethylene glycol chains) manufactured by NOF Corporation, product name)), "BLEMMER 50 POEP-800B" (manufactured by NOF Corporation, octoxypolyethylene glycol-polypropylene glycol-methacrylate (having eight ethylene glycol chains and six propylene glycol chains), product name), "BLEMMER 20 ANEP-600" (nonylphenoxy(ethylene glycol-polypropylene glycol) monoacrylate manufactured by NOF Corporation, product name), "BLEMMER AME-100" (manufactured by NOF Corporation, product name), "BLEMMER AME-200" (manufactured by NOF Corporation, product name), and "BLEMMER 50AOEP-800B" (manufactured by NOF Corporation, product name); silane coupling agent-containing monomers such as 3-(meth)acryloxypropyl trimethoxysilane, 3-(meth)acryloxypropylmethyl diethoxysilane, 3-(meth)acryloxypropyl triethoxysilane, 3-acryloxypropyl trimethoxysilane, vinyl trimethoxysilane, and vinyl triethoxysilane; and organosilyl group-containing monomers other than the silane coupling agent-containing monomers, such as trimethylsilyl (meth)acrylate, triethylsilyl (meth)acrylate, tri-n-propylsilyl (meth)acrylate, tri-n-butylsilyl (meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)acrylate, tribenzylsilyl (meth)acrylate, triisopropylsilyl (meth)acrylate, triisobutylsilyl (meth)acrylate, tri-s-butylsilyl (meth)acrylate, tri-2-methylisopropylsilyl (meth)acrylate, tri-tert-butylsilyl (meth)acrylate, ethyldimethylsilyl (meth)acrylate, n-butyldimethylsilyl (meth)acrylate, diisopropyl-n-butylsilyl (meth)acrylate, n-octyldi-n-butylsilyl (meth)acrylate, diisopropylstearylsilyl (meth)acrylate, dicyclohexylphenylsilyl (meth)acrylate, tert-butyldiphenylsilyl (meth)acrylate, lauryldiphenylsilyl (meth)acrylate, triisopropylsilylmethyl malate, triisopropylsilylamyl malate, tri-n-butylsilyl-n-butyl malate, tert-butyldiphenylsilylmethyl malate, tert-butyldiphenylsilyl-n-butyl malate, triisopropylsilylmethyl fumarate, triisopropylsilylamyl fumarate, tri-n-butylsilyl-n-butyl fumarate, tert-butyldiphenylsilylmethyl fumarate, tert-butyldiphenylsilyl-n-butyl fumarate, Silaplane FM-0711 (manufactured by JNC corporation, product name), Silaplane FM-0721 (manufactured by JNC corporation, product name), Silaplane FM-0725 (manufactured by JNC corporation, product name), Silaplane TM-0701 (manufactured by JNC corporation, product name), Silaplane TM-0701T (manufactured by JNC corporation, product name), X-22-174ASX (manufactured by Shin-Etsu Chemical Co., Ltd., product name), X-22-174BX (manufactured by Shin-Etsu Chemical Co., Ltd., product name), KF-2012 (manufactured by Shin-Etsu Chemical Co., Ltd., product name), X-22-2426 (manufactured by Shin-Etsu Chemical Co., Ltd., product name), and X-22-2404 (manufactured by Shin-Etsu Chemical Co., Ltd., product name).

Halogenated olefins such as vinyl chloride, vinylidene chloride, vinyl fluoride, vinylidene fluoride, and chlorotrifluoroethylene, fluorine-containing monomers (however, the halogenated olefins are excluded) such as 2-isocyanatoethyl (meth)acrylate, 2,2,2-trifluoroethyl (meth)acrylate, 2,2,3,3,3-pentafluorophenyl (meth)acrylate, 2-(perfluorobutyl) ethyl (meth)acrylate, 3-(perfluorobutyl)-2-hydroxypropyl (meth)acrylate, 2-(perfluorohexyl)ethyl (meth)acrylate, 3-perfluorohexyl-2-hydroxypropyl (meth)acrylate, 3-(perfluoro-3-methylbutyl)-2-hydroxypropyl (meth)acrylate, 2,2,3,3-tetrafluoropropyl (meth)acrylate, 1H,1H,SH-octafluoropentyl (meth)acrylate, 1H,1H,SH-octafluoropentyl (meth)methacrylate, 1H,1H,2H,2H-tridecafluorooctyl (meth)acrylate, 1H-1-(trifluoromethyl)trifluoroethyl (meth)acrylate, 1H,1H,3H-hexafluorobutyl (meth)acrylate, and 1,2,2,2-tetrafluoro-1-(trifluoromethyl)ethyl (meth)acrylate, monomers having an acetal structure such as 1-butoxyethyl (meth)acrylate, 1-(2-ethylhexyloxy)ethyl (meth)acrylate, 1-(cyclohexyloxy)ethyl methacrylate, and 2-tetrahydropyranyl (meth)acrylate, 4-methacryloyloxybenzophenone, and 2-isocyanatoethyl (meth)acrylate.

In terms of the copolymerizability and glass transition point (Tg) of the polymer (B2), the monomer (b'2) is preferably a (meth)acrylic acid ester, more preferably a hydrocarbon group-containing (meth)acrylic acid ester, still more preferably methyl (meth)acrylate, and even still more preferably methyl methacrylate.
In addition, also in terms of imparting the compatibility with the vinyl chloride-based polymer (A1), to the polymer (B2), the monomer (b'2) is preferably a (meth)acrylic acid ester, more preferably a hydrocarbon group-containing (meth)acrylic acid ester, still more preferably methyl (meth)acrylate, and even still more preferably methyl methacrylate.
One kind of the monomer (b'2) can be used alone, or two or more kinds thereof can be used in combination.
When methyl methacrylate is used as the monomer (b'2), which is the raw material of the polymer (B2), the content of methyl methacrylate is preferably 50% by mass or more, more preferably 80% by mass or more, and still more preferably 90% by mass or more, with respect to 100% by mass of a total of the monomer (b'2). When containing 50% by mass or more of methyl methacrylate, it is easy to adjust the glass transition point (Tg) of the polymer (B2) to be in a preferred range, and the compatibility between the (meth)acrylic copolymer (B) and the vinyl chloride-based polymer (A1) and the miscibility during the preparation of the resin composition according to the present invention are favorable.

(Polymer (B3))

The (meth)acrylic copolymer (B) may contain a polymer (B3) in addition to the polymer (B1) and the polymer (B2).

· Monomer unit (b3)

The polymer (B3) preferably contains a monomer unit (b3) represented by Formula (4) as a monomer unit.

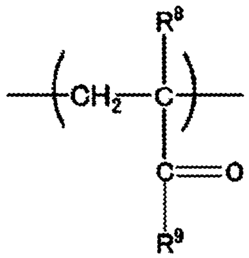

(4)

In Formula (4), $R^8$ represents a hydrogen atom or a methyl group, $R^9$ is a hydrogen atom, a halogen atom, OH, $OR^{35}$, CN, $NR^{20}R^{21}$, or $R^{22}$, where $R^{20}$, $R^{21}$, and $R^{35}$ each independently represent a hydrogen atom, a substituted or unsubstituted alkyl group, a substituted or unsubstituted alicyclic group, a substituted or unsubstituted aryl group, a substituted or unsubstituted heteroaryl group, a substituted or unsubstituted non-aromatic heterocyclic group, a substituted or unsubstituted aralkyl group, a substituted or unsubstituted alkaryl group, or a substituted or unsubstituted organosilyl group, and $R^{22}$ represents a substituted or unsubstituted aryl group or a substituted or unsubstituted heteroaryl group.
The monomer unit (b3) is a monomer unit derived from a monomer (b'3).
Non-limited examples of the monomer (b'3) include the following monomers.
Hydrocarbon group-containing (meth)acrylic acid esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, isoamyl (meth)acrylate, hexyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, hexadecyl (meth)acrylate, stearyl (meth)acrylate, isostearyl (meth)acrylate, phenyl (meth)acrylate, benzyl (meth)acrylate, cyclohexyl (meth)acrylate, tetrahydrofurfuryl (meth)acrylate, isobornyl (meth)acrylate, 3,5,5-trimethylcyclohexyl (meth)acrylate, dicyclopentanyl (meth)acrylate, dicyclopentenyl (meth)acrylate, dicyclopentenyloxyethyl (meth)acrylate, terpene acrylate and a derivative thereof, a hydrogenated rosin acrylate and a derivative thereof, and docosyl (meth)acrylate.
Hydroxyl group-containing (meth)acrylic acid esters such as 2-hydroxyethyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, and glycerol (meth)acrylate.
Carboxyl group-containing vinyl monomers such as 2-(meth)acryloyloxyethyl hexahydrophthalic acid, 2-(meth)acryloyloxypropyl hexahydrophthalic acid, 2-(meth)acryloyloxyethyl phthalic acid, 2-(meth)acryloyloxy propylphthalic acid, 2-(meth)acryloyloxyethyl maleic acid, 2-(meth)acryloyloxypropyl maleic acid, 2-(meth)acryloyloxyethyl succinic acid, 2-(meth)acryloyloxypropyl succinic acid, crotonic acid, (meth)acrylic acid fumaric acid, maleic acid, itaconic acid, citraconic acid, monomethyl maleate, monoethyl maleate, monooctyl maleate, monomethyl itaconate, monoethyl itaconate, monobutyl itaconate, monooctyl itaconate, monomethyl fumarate, monoethyl fumarate, monobutyl fumarate, monooctyl fumarate, and monoethyl citraconate.

Acid anhydride group-containing vinyl monomers such as maleic anhydride and itaconic anhydride.

Unsaturated dicarboxylic acid diester monomers such as dimethyl malate, dibutyl malate, dimethyl fumarate, dibutyl fumarate, dibutyl itaconate, and diperfluorocyclohexyl fumarate.

Epoxy group-containing vinyl monomers such as glycidyl (meth)acrylate, glycidyl $\alpha$-ethyl acrylate, and 3,4-epoxybutyl (meth)acrylate.

Amino group-containing (meth)acrylic acid ester-based vinyl monomers such as dimethylaminoethyl (meth)acrylate and diethylaminoethyl (meth)acrylate.

Vinyl monomers containing an amide group, such as (meth)acrylamide, N-methyl (meth)acrylamide, N,N'-dimethyl (meth)acrylamide, N-isopropyl acrylamide, N-(hydroxymethyl) acrylamide, diethyl (meth)acrylamide, hydroxyethyl acrylamide, N-butoxymethyl (meth)acrylamide, diacetone acrylamide, maleic acid amide, and maleimide.

Polyfunctional vinyl monomers such as ethylene glycol di(meth)acrylate, 1,3-butylene glycol di(meth)acrylate, 1,4-butanediol di(meth)acrylate, 1,6-hexanediol di(meth)acrylate, diethylene glycol di(meth)acrylate, triethylene glycol di(meth)acrylate, tetraethylene glycol di(meth)acrylate, polyethylene glycol di(meth)acrylate, tripropylene glycol di(meth)acrylate, neopentyl glycol di(meth)acrylate, 1,9-nonandiol di(meth)acrylate, 1,10-decanediol di(meth)acrylate, trimethylolpropane tri(meth)acrylate, pentaerythritol tetra(meth)acrylate, dipentaerythritol hexa(meth)acrylate, allyl (meth)acrylate, triallyl cyanurate, diallyl maleate, polypropylene glycol diallyl ether, and N,N'-methylene bis(meth)acrylamide.

Heterocyclic ring-based monomers such as (meth)acryloyl morpholine, vinyl pyrrolidone, vinyl pyridine, and vinyl carbazole.

Polyethylene glycol (meth)acrylate, polypropylene glycol (meth)acrylate, phenoxyethyl (meth)acrylate, nonylphenoxyethyl (meth)acrylate, acetoxyethyl (meth)acrylate, "PLAXEL FM" (a caprolactone-added monomer manufactured by Daicel Corporation, product name), silane coupling agent-containing monomers such as 3-(meth)acryloxypropyl trimethoxysilane, 3-(meth)acryloxypropylmethyl diethoxysilane, 3-(meth)acryloxypropyl triethoxysilane, 3-acryloxypropyl trimethoxysilane, vinyl trimethoxysilane, and vinyl triethoxysilane, and organosilyl group-containing monomers other than the silane coupling agent-containing monomers, such as trimethylsilyl (meth)acrylate, triethylsilyl (meth)acrylate, tri-n-propylsilyl (meth)acrylate, tri-n-butylsilyl (meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)acrylate, tribenzylsilyl (meth)acrylate, triisopropylsilyl (meth)acrylate, triisobutylsilyl (meth)acrylate, tri-s-butylsilyl (meth)acrylate, tri-2-methylisopropylsilyl (meth)acrylate, tri-tert-butylsilyl (meth)acrylate, ethyldimethylsilyl (meth)acrylate, n-butyldimethylsilyl (meth)acrylate, diisopropyl-n-butylsilyl (meth)acrylate, n-octyldi-n-butylsilyl (meth)acrylate, diisopropylstearylsilyl (meth)acrylate, dicyclohexylphenylsilyl (meth)acrylate, tert-butyldiphenylsilyl (meth)acrylate, lauryldiphenylsilyl (meth)acrylate, triisopropylsilylmethyl malate, triisopropylsilylamyl malate, tri-n-butylsilyl-n-butyl malate, tert-butyldiphenylsilylmethyl malate, and tert-butyldiphenylsilyl-n-butyl malate.

Fluorine-containing monomers (however, the halogenated olefins are excluded) such as 2-isocyanatoethyl (meth)acrylate, 2,2,2-trifluoroethyl (meth)acrylate, 2,2,3,3,3-pentafluorophenyl (meth)acrylate, 2-(perfluorobutyl) ethyl (meth)acrylate, 3-(perfluorobutyl)-2-hydroxypropyl (meth)acrylate, 2-(perfluorohexyl)ethyl (meth)acrylate, 3-perfluorohexyl-2-hydroxypropyl (meth)acrylate, 3-(perfluoro-3-methylbutyl)-2-hydroxypropyl (meth)acrylate, 2,2,3,3-tetrafluoropropyl (meth)acrylate, 1H,1H,5H-octafluoropentyl (meth)acrylate, 1H,1H,5H-octafluoropentyl (meth)methacrylate, 1H,1H,2H,2H-tridecafluorooctyl (meth)acrylate, 1H-1-(trifluoromethyl)trifluoroethyl (meth)acrylate, 1H,1H,3H-hexafluorobutyl (meth)acrylate, and 1,2,2,2-tetrafluoro-1-(trifluoromethyl)ethyl (meth)acrylate, and monomers having an acetal structure such as 1-butoxyethyl (meth)acrylate, 1-(2-ethylhexyloxy)ethyl (meth)acrylate, 1-(cyclohexyloxy)ethyl methacrylate, and 2-tetrahydropyranyl (meth)acrylate.

4-methacryloyloxybenzophenone and 2-isocyanatoethyl (meth)acrylate.

In terms of ease of handling, the monomer (b'3) is preferably at least one selected from the group consisting of the following monomers.

Hydrocarbon group-containing (meth)acrylic acid esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, hexyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, hexadecyl (meth)acrylate, stearyl (meth)acrylate, isostearyl (meth)acrylate, phenyl (meth)acrylate, benzyl (meth)acrylate, cyclohexyl (meth)acrylate, tetrahydrofurfuryl (meth)acrylate, isobornyl (meth)acrylate, and terpene acrylate, and a derivative thereof.

Hydroxyl group-containing (meth)acrylic acid esters such as 2-hydroxyethyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate.

Carboxyl group-containing vinyl monomers such as (meth)acrylic acid.

Epoxy group-containing vinyl monomers such as glycidyl (meth)acrylate and glycidyl α-ethyl acrylate.

Amino group-containing (meth)acrylic acid ester-based vinyl monomers such as dimethylaminoethyl (meth)acrylate and diethylaminoethyl (meth)acrylate.

Vinyl monomers containing an amide group, such as (meth)acrylamide, N-methyl (meth)acrylamide, N,N'-dimethyl (meth)acrylamide, N-isopropyl acrylamide, and N-(hydroxymethyl) acrylamide.

Polyfunctional vinyl monomers such as ethylene glycol di(meth)acrylate, 1,3-butylene glycol di(meth)acrylate, 1,4-butanediol di(meth)acrylate, 1,6-hexanediol di(meth)acrylate, diethylene glycol di(meth)acrylate, triethylene glycol di(meth)acrylate, tetraethylene glycol di(meth)acrylate, pentaerythritol tetra(meth)acrylate, allyl (meth)acrylate, and N,N'-methylene bis(meth)acrylamide.

Heterocyclic ring-based monomers such as (meth)acryloyl morpholine, vinyl pyrrolidone, vinyl pyridine, and vinyl carbazole.

Silane coupling agent-containing monomers such as 3-(meth)acryloxypropyl trimethoxysilane, 3-(meth)acryloxypropylmethyl diethoxysilane, 3-(meth)acryloxypropyl triethoxysilane, and 3-acryloxypropyl trimethoxysilane, and organosilyl group-containing monomers other than the silane coupling agent-containing monomers, such as trimethylsilyl (meth)acrylate, triethylsilyl (meth)acrylate, tri-n-propylsilyl (meth)acrylate, and tri-n-butylsilyl (meth)acrylate.

Fluorine-containing monomers (however, the halogenated olefins are excluded) such as 2,2,2-trifluoroethyl (meth)acrylate and 2,2,3,3-tetrafluoropropyl (meth)acrylate, and monomers having an acetal structure, such as 1-butoxyethyl (meth)acrylate and 1-(2-ethylhexyloxy)ethyl (meth)acrylate.

(Monomer unit (d))

The (meth)acrylic copolymer (B) may further contain a monomer unit (d) derived from a macromonomer.

The macromonomer means a macromolecule having a polymerizable functional group.

In a case where a macromonomer (d') is used as a raw material for the monomer unit (d), a constitutional component consisting of a specific polymer can be introduced into the (meth)acrylic copolymer (B). The monomer unit (d) may be contained in any of the polymer (B1), the polymer (B2), and the polymer (B3).

When the macromonomer (d') is used as a raw material of the polymer (B1), the polymerizable functional group contained in the macromonomer (d') preferably has copolymerizability with the monomer (b'2), which is a raw material of the polymer (B2). On the contrary, when the macromonomer (d') is used as a raw material of the polymer (B2), the polymerizable functional group contained in the macromonomer (d') preferably has copolymerizability with the monomer (b'1), which is a raw material of the polymer (B1).

The monomer unit constituting the macromonomer (d') can be appropriately selected from the group consisting of the monomer unit (b1), the monomer unit (b2), and the monomer unit (b3). The raw material of the macromonomer (d') can be appropriately selected from the group consisting of the monomer (b'1), the monomer (b'), and the monomer (b'3).

In a case where the macromonomer (d') is used as a raw material of the polymer (B2), the macromonomer (d') can be handled as a solid, which is preferable. In a case where the macromonomer (d') is used as a raw material of the polymer (B2) and subjected to copolymerization with the monomer unit, which is a raw material of the polymer (B1), it is possible to efficiently produce a (meth)acrylic copolymer.

The radically polymerizable group contained in the macromonomer (d') is preferably a group having an ethylenic unsaturated bond. Examples of the group having an ethylenic unsaturated bond include $CH_2=C(COOR^6)-CH_2-$, a (meth)acryloyl group, a 2-(hydroxymethyl)acryloyl group, and a vinyl group.

Here, $R^6$ represents a hydrogen atom, an alkyl group which is unsubstituted or has a substituent, an alicyclic group which is unsubstituted or has a substituent, an aryl group which is unsubstituted or has a substituent, a heteroaryl group which is unsubstituted or has a substituent, or a non-aromatic heterocyclic group which is unsubstituted or has a substituent.

Specific examples of the unsubstituted alkyl group, the unsubstituted alicyclic group, the unsubstituted aryl group, the unsubstituted heteroaryl group, and the unsubstituted non-aromatic heterocyclic group, as $R^6$, and the substituent of each group include the same ones as those as $R^{35}$ of $COOR^{35}$ as $R^2$ in Formula (1). $R^6$ is preferably an alkyl group which is unsubstituted or has a substituent, or an alicyclic group which is unsubstituted or has a substituent, and more preferably an unsubstituted alkyl group or an alicyclic group which is unsubstituted or has an alkyl group as a substituent.

From the viewpoint of ease of availability, $R^6$ is preferably at least one selected from the group consisting of a methyl group, an ethyl group, an n-propyl group, an iso-propyl group, an n-butyl group, a tert-butyl group, a pentyl group, a hexyl group, a heptyl group, an octyl group, a cyclopropyl group, a cyclobutyl group, an isobornyl group, or an adamantyl group is preferable, and a methyl group, an ethyl group, an n-propyl group, an iso-propyl group, an n-butyl group, a tert-butyl group, a cyclopropyl group, a cyclobutyl group, an isobornyl group, and an adamantyl group, among a hydrogen atom, an alkyl group which is unsubstituted or has a substituent, an alicyclic group which is unsubstituted or has a

substituent, an aryl group which is unsubstituted or has a substituent, a heteroaryl group which is unsubstituted or has a substituent, and a non-aromatic heterocyclic group which is unsubstituted or has a substituent.

The macromonomer (d') preferably has a monomer unit having a radically polymerizable group, and the number of monomer units having a radically polymerizable group is preferably two or more.

The macromonomer (d') preferably has two or more monomer units (b2). The macromonomer (d') is more preferably one having the structure of Formula (2).

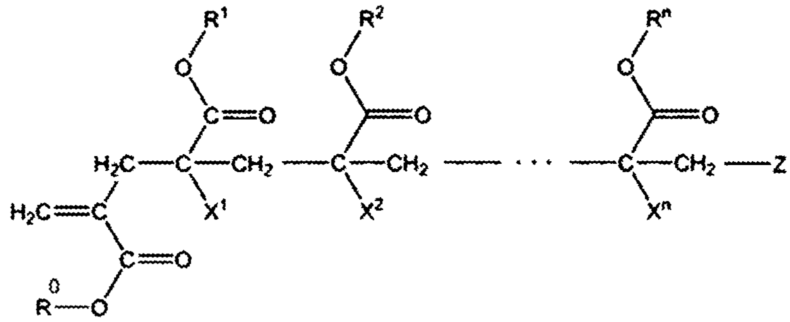

(2)

In Formula (2), $R^0$ to $R^n$ each independently represent a hydrogen atom, an alkyl group which is unsubstituted or has a substituent, an alicyclic group which is unsubstituted or has a substituent, an aryl group which is unsubstituted or has a substituent, a heteroaryl group which is unsubstituted or has a substituent, or a non-aromatic heterocyclic group which is unsubstituted or has a substituent, where a plurality of $R^0$ to $R^n$ may be the same or different from each other, $X^1$ to $X^n$ represent a hydrogen atom or a methyl group, where a plurality of $X^1$ to $X^n$ may be the same or different from each other, Z is a terminal group, and n is a natural number of 2 to 10,000.

Similar to a case of a terminal group of a polymer obtained by a known radical polymerization, examples of Z include a hydrogen atom, a group derived from a radical polymerization initiator, and a radically polymerizable group.

n is 2 to 10,000, and in terms of moldability, is preferably 2 to 1,000, more preferably 5 to 1,000, still more preferably 10 to 500, and even still more preferably 20 to 500.

Z is the terminal group of the macromonomer (d'). Similar to a case of a terminal group of a polymer obtained by a known radical polymerization, examples of Z include a hydrogen atom, a group derived from a radical polymerization initiator, and a radically polymerizable group.

$R^0$ to $R^n$ in Formula (2) is the same as $R^6$ of $CH_2=C(COOR^6)-CH_2-$, which is a group having an ethylenic unsaturated bond.

From the viewpoint of maintaining hydrophobicity, $R^6$ in the copolymer is preferably an alkyl group, an alicyclic group, an aryl group, a heteroaryl group, or a non-aromatic heterocyclic group, more preferably an alkyl group or an alicyclic group, and still more preferably an alkyl group.

The number average molecular weight (Mn) of the macromonomer (d') is preferably 200 to 100,000, more preferably 500 to 100,000, still more preferably 1,000 to 50,000, and even still more preferably 2,000 to 50,000.

When the number average molecular weight of the macromonomer (d') is 200 or more and 100,000 or less, the moldability is more excellent.

The number average molecular weight of the macromonomer (d') is calculated by gel permeation chromatography (GPC) as a relative molecular weight with polymethyl methacrylate as a reference resin.

The proportion of the constitutional monomer unit (b2) with respect to 100% by mass of a total of all constitutional units constituting the macromonomer (d') is preferably 40% by mass or more, more preferably 50% by mass or more, and still more preferably 100% by mass.

(Formulation and molecular weight of (meth)acrylic copolymer (B))

The proportion of the monomer unit (b1) in the (meth)acrylic copolymer (B) is preferably 10% by mass or more, more preferably 20% by mass, still more preferably 30% by mass or more, and even still more preferably 40% by mass or more, with respect to 100% by mass of a total of all constitutional units constituting the (meth)acrylic copolymer (B). In addition, the proportion of the monomer unit (b1) in the (meth)acrylic copolymer (B) is preferably 90% by mass or less, more preferably 80% by mass or less, still more preferably 70% by mass or less, and even still more preferably 60% by mass or less, with respect to 100% by mass of a total of all constitutional units constituting the (meth)acrylic copolymer (B). When the proportion of the monomer unit (b1) in the (meth)acrylic copolymer (B) is more than 10% by mass, the effect of suppressing protein adhesion is more excellent, and when the proportion thereof is 90% by mass or

less, the moldability is more excellent.

The proportion of the monomer unit (b2) in the (meth)acrylic copolymer (B) is preferably 10% by mass or more, more preferably 20% by mass, still more preferably 30% by mass or more, and even still more preferably 40% by mass or more, with respect to 100% by mass of a total of all constitutional units constituting the (meth)acrylic copolymer (B). In addition, the proportion of the monomer unit (b2) in the (meth)acrylic copolymer (B) is preferably 90% by mass or less, more preferably 80% by mass or less, still more preferably 70% by mass or less, and even still more preferably 60% by mass or less, with respect to 100% by mass of a total of all constitutional units constituting the (meth)acrylic copolymer (B). When the proportion of the monomer unit (b2) is more than 10% by mass, the moldability is more excellent, and when the proportion thereof is 90% by mass or less, the effect of suppressing protein adhesion is more excellent.

When the (meth)acrylic copolymer (B) contains the monomer unit (b3), The proportion of the monomer unit (b3) in the (meth)acrylic copolymer (B) is preferably 0% to 33% by mass, more preferably 0% to 25% by mass, and still more preferably 0.5% to 20% by mass, and it may be 0% by mass, with respect to 100% by mass of a total of all constitutional units constituting the (meth)acrylic copolymer (B). In a case where the proportion of the monomer unit (b3) in the (meth)acrylic copolymer (B) is 0% to 33% by mass with respect to 100% by mass of a total of all constitutional units constituting the (meth)acrylic copolymer (B), the functions of the polymer (B1) and the polymer (B2) are not impaired.

The weight average molecular weight of the (meth)acrylic copolymer (B) is preferably 75,000 or more, more preferably 75,000 or more and 1,000,000 or less, and still more preferably 80,000 or more and 500,000 or less. When the weight average molecular weight thereof is 75,000 or more and 1,000,000 or less, the moldability is excellent. The weight average molecular weight of the copolymer is calculated by gel permeation chromatography (GPC) as a relative molecular weight with polymethyl methacrylate as a reference resin.

(Production method of (meth)acrylic copolymer (B))

Examples of the production method of the (meth)acrylic copolymer (B) include a living polymerization method and a method using a macromonomer. Examples of the living polymerization method include a living radical polymerization method and a living anionic polymerization method. Examples of the living radical polymerization method include reversible addition-fragmentation chain transfer polymerization (RAFT), atom transfer radical polymerization (ATRP), nitroxide-mediated radical polymerization (NMP), and living radical polymerization using an organotellurium as a growth terminal (TERP). A method using a macromonomer is preferable because there is an advantage that the method is superior in that the (meth)acrylic copolymer (B) can be produced relatively easily, and the removal of residues of a catalyst and an auxiliary agent, which are required in the living polymerization method, and the terminal treatment step are not required.

(Production method of (meth)acrylic copolymer (B) using macromonomer)

In a method of producing the (meth)acrylic copolymer (B) using the macromonomer (d'), the macromonomer (d') may be used as a raw material of any of the polymer (B1), the polymer (B2), and the polymer (B3). Here, a method of using the macromonomer (d') as a raw material of the polymer (B2) will be described as an example.

Examples of the method include a method of subjecting a monomer mixture containing the macromonomer (d') and the monomer (b'1), which is a raw material of the polymer (B2), to bulk polymerization, suspension polymerization, or solution polymerization.

The method is preferably a method of subjecting a polymerizable composition to suspension polymerization, where the polymerizable composition contains 0.001 to 5 parts by mass of a non-metal chain transfer agent with respect to 100 parts by mass of the monomer mixture.

The polymerizable composition preferably contains a dispersing agent.

In a case where the suspension polymerization is carried out, a copolymer which has excellent moldability and is likely to be easily processed can be obtained. In a case where the solution polymerization is carried out, a copolymer having a narrow molecular weight distribution can be obtained. For example, a bead-shaped copolymer may be recovered from a suspension obtained by suspension polymerization and used for producing a molded product, or the bead-shaped copolymer may be molded into a pellet shape and used in the production of a molded product. For example, the polymer solution obtained by solution polymerization is dropwise added to a poor solvent to carry out reprecipitation, or the solvent or the like is removed by a method such as degassing extrusion to recover a powdery copolymer, which may be used for the production of a molded product. Alternatively, the powdery copolymer may be molded into a pellet shape and used in the production of a molded product.

Examples of the preferred production method for the suspension polymerization of the copolymer include a method (A), a method (B), and a method (C).

In the method (A), the macromonomer (d') is dissolved in a monomer other than the macromonomer (d') to prepare a monomer mixture, and then a radical polymerization initiator and, as necessary, a non-metal chain transfer

agent are added to the monomer mixture to prepare a polymerizable composition. Then, the polymerizable composition is dispersed in an aqueous solution to which, as necessary, a dispersing agent is added to prepare a syrup dispersion liquid of the polymerizable composition, and the obtained syrup dispersion liquid of the polymerizable composition is subjected to the suspension polymerization.

In the method (A), particles having a uniform formulation can be easily obtained by preparing a syrup in which macromonomer particles are completely dissolved in the monomer. As a result, in a case of a copolymer obtained by the method (A), the mechanical strength of the molded product is excellent.

In the method (B), first, a monomer other than the macromonomer (d') is added to an aqueous suspension obtained by dispersing, in water, the macromonomer (d') and a dispersing agent which is added as necessary, whereby a syrup dispersion liquid of the monomer mixture is prepared. A radical polymerization initiator and, as necessary, a non-metal chain transfer agent are added to this syrup dispersion liquid of the monomer mixture to prepare the syrup dispersion liquid of the polymerizable composition. Then, the syrup dispersion liquid of the polymerizable composition is subjected to suspension polymerization.

In the method (B), the recovery step of the macromonomer (d') can be omitted, and thus the production step can be shortened. That is, in the method (B), a suspension obtained by synthesizing a macromonomer (d') by the suspension polymerization method is used as the aqueous suspension, and it is possible to carry out copolymerization by adding the monomer to this suspension. Therefore, a step of recovering the macromonomer (d') can be omitted. As the method of synthesizing the macromonomer (d') by the suspension polymerization method, a known method can be used.

On the other hand, in the method (A), the macromonomer (d') synthesized by the suspension polymerization method is recovered as particles and used.

In the method (C), the macromonomer (d') is dissolved in a monomer other than the macromonomer (d') to prepare a monomer mixture, and then a radical polymerization initiator and, as necessary, a non-metal chain transfer agent are added to the monomer mixture to prepare a polymerizable composition. Thereafter, the polymerizable composition is dispersed in water to prepare a syrup dispersion liquid of the polymerizable composition. Next, a dispersing agent is added immediately before polymerization, and then the syrup dispersion liquid of the polymerizable composition is subjected to suspension polymerization.

Here, the term "aqueous suspension" means a state in which a monomer or a syrup is dispersed in water.

In the method (C), it is possible to stabilize the monomer dispersion state in the system, and thus particles having a uniform formulation are easily obtained as compared with the method (A).

In any method of the method (A), the method (B), or the method (C), it is preferable to raise the temperature when dissolving the macromonomer (d') in the monomer other than the macromonomer (d').

The heating temperature at which the macromonomer (d') is dissolved in a monomer other than the macromonomer (d') is preferably 30°C to 90°C. When the heating temperature is 30°C or higher, the solubility of the macromonomer (d') in a monomer other than the macromonomer (d') tends to be favorable, and when the heating temperature is 90°C or lower, the volatilization of the monomer mixture tends to be capable of being suppressed. The lower limit of the heating temperature is more preferably 35°C or higher. In addition, the upper limit of the heating temperature is more preferably 75°C or lower. That is, when the macromonomer (d') is dissolved in a monomer other than the macromonomer (d'), the monomer mixture is preferably heated to 30°C to 90°C, and more preferably heated to 35°C to 75°C.

When a radical polymerization initiator is used at the time of polymerizing a monomer mixture containing the macromonomer (d'), the timing of adding the radical polymerization initiator is preferably after dissolving the macromonomer (d') in a monomer other than the macromonomer (d'). That is, it is preferable that the macromonomer (d') is dissolved in a monomer other than the macromonomer (d') to prepare a monomer mixture, and then a radical polymerization initiator is added to the monomer mixture.

The temperature of the monomer mixture at the time of adding the radical polymerization initiator is preferably 0°C or higher and equal to or lower than the temperature obtained by subtracting 15°C from the 10-hour half-life temperature of the radical polymerization initiator to be used. When the temperature at the time of adding the radical polymerization initiator is 0°C or higher, the solubility of the radical polymerization initiator in a monomer other than the macromonomer (d') tends to be favorable. In addition, when the temperature at the time of adding the radical polymerization initiator is equal to or lower than the temperature obtained by subtracting 15°C from the 10-hour half-life temperature of the radical polymerization initiator, stable polymerization tends to be capable of being carried out.

Examples of the radical polymerization initiator include an organic peroxide and an azo compound.

Non-limited examples of the organic peroxide include 2,4-dichlorobenzoyl peroxide, tert-butyl peroxypivalate, o-methylbenzoyl peroxide, bis-3,5,5-trimethylhexanoyl peroxide, octanoyl peroxide, tert-butylperoxy-2-ethyl hexanoate, cyclohexanone peroxide, benzoyl peroxide, methyl ethyl ketone peroxide, dicumyl peroxide, lauroyl peroxide, diisopropyl benzene hydroperoxide, tert-butyl hydroperoxide, and di-tert-butyl peroxide.

Non-limited examples of the azo compound include 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), and dimethyl 2,2'-azobis(2-methylpropionate).

In terms of ease of availability, the radical polymerization initiator is preferably at least one selected from the group consisting of benzoyl peroxide, 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), and dimethyl 2,2'-azobis(2-methylpropionate).

One kind of the radical polymerization initiator can be used alone, or two or more kinds thereof can be used in combination.

In terms of controlling the heat generation of polymerization, the amount of the radical polymerization initiator to be added is preferably 0.0001 parts by mass or more and 10 parts by mass or less, and more preferably 0.0005 parts by mass or more and 5 parts by mass or less, with respect to 100 parts by mass of the total amount of the macromonomer (d') and the monomer other than the macromonomer (d').

In the method (A) or the method (B) which are described above, the polymerization temperature at the time of subjecting the polymerizable composition to suspension polymerization is not particularly limited. In general, it is preferably 50°C to 120°C and more preferably 70°C to 100°C.

In addition, the polymerization time is preferably 1 to 6 hours and more preferably 1.5 to 4 hours.

The stirring condition is preferably 100 to 800 rpm and more preferably 150 to 600 rpm.

Examples of the dispersing agent to be used for suspension polymerization include an alkali metal salt of a poly(meth)acrylic acid, a copolymer of an alkali metal salt of (meth)acrylic acid and a (meth)acrylic acid ester, a copolymer of an alkali metal salt of a sulfoalkyl (meth)acrylate and a (meth)acrylic acid ester, an alkali metal salt of polystyrene sulfonic acid, a copolymer of an alkali metal salt of styrene sulfonic acid and a (meth)acrylic acid ester, a copolymer of an alkali metal salt of (meth)acrylic acid, an alkali metal salt of sulfoalkyl (meth)acrylate, an alkali metal salt of styrene sulfonic acid, and a (meth)acrylic acid ester, a copolymer of an alkali metal salt of (meth)acrylic acid, and an alkali metal salt of sulfoalkyl (meth)acrylate, and a (meth)acrylic acid ester, a copolymer of an alkali metal salt of (meth)acrylic acid, an alkali metal salt of styrene sulfonic acid, and (meth)acrylic acid ester, and a copolymer of an alkali metal salt of sulfoalkyl (meth)acrylate, an alkali metal salt of styrene sulfonic acid, and a (meth)acrylic acid ester, a polyvinyl alcohol having a saponification degree of 70% to 100%; methyl cellulose; starch; and hydroxyapatite. One kind of these may be used alone, or a plurality of kinds thereof may be used in combination. Among these, a copolymer of an alkali metal salt of sulfoalkyl (meth)acrylate and a (meth)acrylic acid ester, where the copolymer has favorable dispersion stability at the time of carrying out suspension polymerization, is preferable.

The content of the dispersing agent is preferably 0.005% to 5% by mass, and more preferably 0.01% to 1% by mass, with respect to the total mass of the aqueous suspension. When the content of the dispersing agent in the aqueous suspension is 0.005% by mass or more, the dispersion stability of the suspension polymerization solution is favorable, and the washability, the dehydration property, the drying property, and the fluidity of the polymer to be obtained tend to be favorable. In addition, when the content of the dispersing agent is 5% by mass or less, foaming during polymerization tends to hardly occur, and thus the polymerization stability tends to be favorable.

An electrolyte such as sodium carbonate, sodium sulfate, or manganese sulfate may be added to the aqueous suspension for the purpose of improving the dispersion stability of the aqueous suspension. In this case, the proportion of the electrolyte in the case of the method (A) is preferably 0.01% to 0.5% by mass with respect to the total mass of the aqueous suspension. In addition, in the case of the method (B), the preferred proportion of the electrolyte in the aqueous suspension is preferably 0.01 % to 10% by mass.

It is preferable to polymerize the monomer mixture and the polymerizable composition, which contains a non-metal chain transfer agent described later, to obtain a copolymer.

The non-metal chain transfer agent is added to the monomer mixture at the time of obtaining a polymer and is particularly preferably added at the time of obtaining a polymer by the suspension polymerization method. In a case where the non-metal chain transfer agent is used as a chain transfer agent during the production a polymer, the unreacted macromonomer contained in the polymer can be reduced.

Examples of the non-metal chain transfer agents include sulfur-containing chain transfer agents such as t-dodecyl mercaptan and n-octyl mercaptan, an $\alpha$-methyl styrene dimer, carbon tetrachloride, and a terpenoid; however, in terms of having ease of availability and a high chain transfer ability, a sulfur-containing chain transfer agent is preferable.

The content of the non-metal chain transfer agent is preferably 0.01 to 0.5 parts by mass with respect to 100 parts by mass of a total of the monomer mixture.

When the content of the non-metal chain transfer agent is 0.01 parts by mass or more, the addition effect is sufficiently obtained, and when the content of the non-metal chain transfer agent is 0.5 parts by mass or less, the mechanical strength after curing is excellent. The content of the non-metal chain transfer agent is more preferably 0.03 to 0.3 parts by mass and still more preferably 0.05 to 0.2 parts by mass.

[Production method of macromonomer (d')]

The macromonomer (d') can be produced by a known method. Examples of the production method of a macromonomer include a method of producing the macromonomer using a cobalt chain transfer agent (United States Patent No. 4680352), a method of using an α-substituted unsaturated compound such as α-bromomethylstyrene as a chain transfer agent (PCT International Publication No. WO88/04304), a method of chemically bonding a polymerizable group (Japanese Unexamined Patent Application, First Publication No. 60-133007, United States Patent No. 5147952, and Japanese Unexamined Patent Application, First Publication No. H06-298921), and a method of producing the macromonomer by thermal decomposition (Japanese Unexamined Patent Application, First Publication No. H11-240854). Among these, as the production method of the macromonomer (d'), a production of producing the macromonomer (d') using a cobalt chain transfer agent is preferable from the viewpoint of using a catalyst in which the number of production steps is small and a chain transfer constant is large.

Examples of the method of producing the macromonomer (d') using a cobalt chain transfer agent include a bulk polymerization method, a solution polymerization method, and an aqueous dispersion polymerization method such as a suspension polymerization method or an emulsion polymerization method. Among these, the aqueous dispersion polymerization method is preferable from the viewpoint of simplifying a recovery step for the macromonomer (d').

As the cobalt chain transfer agent, a cobalt chain transfer agent represented by General Formula (5) can be used, and for example, those described in Japanese Patent No. 3587530, Japanese Unexamined Patent Application, First Publication No. H6-23209, Japanese Unexamined Patent Application, First Publication No. H7-35411, United States Patent No. 45269945, United States Patent No. 4694054, United States Patent No. 4834326, United States Patent No. 4886861, United States Patent No. 5324879, PCT International Publication No. WO95/17435, and Published Japanese Translation No. H9-510499 can be used.

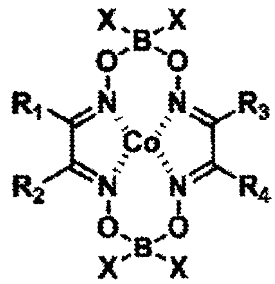

(5)

In Formula (5), $R_1$ to $R_4$ each independently represent an alkyl group, a cycloalkyl group, or an aryl group, and X's each independently represent an F atom, a Cl atom, a Br atom, an OH group, an alkoxy group, an aryloxy group, an alkyl group, or an aryl group.

Specific examples of the cobalt chain transfer agent include bis(borondifluorodimethyldioxyiminocyclohexane) cobalt (II), bis(borondifluorodimethylglyoxymate) cobalt (II), bis(borondifluorodiphenylglyoxymate) cobalt (11), a cobalt (11) complex of a vicinaliminohydroxyimino compound, a cobalt (II) complex of a tetraazatetraalkylcyclotetradecatetraene, an N,N'-bis(salicylidene)ethylenediamino cobalt (11) complex, a cobalt (11) complex of a dialkyldiazadioxodialkyldodecadiene, and a cobalt (II) porphyrin complex. Among them, bis(borondifluorodiphenylglyoxymate) cobalt (II) ($R^1$ to $R^4$: phenyl group, X: F atom), which is stably present in an aqueous medium and has a high chain transfer effect, is preferable. One or more of these can be appropriately selected and used.

The using amount of the cobalt chain transfer agent is preferably 5 ppm to 350 ppm with respect to 100 parts by mass of the total of the monomer for obtaining the macromonomer (d'). When the using amount of the cobalt chain transfer agent used is 5 ppm or more, the decrease in the molecular weight is likely to be sufficient, and when the using amount thereof is 350 ppm or less, the macromonomer (d') to be obtained is not easily colored.

Examples of the solvent used in a case of obtaining the macromonomer (d') by the solution polymerization method include hydrocarbons such as toluene; ethers such as diethyl ether and tetrahydrofuran; halogenated hydrocarbons such as dichloromethane and chloroform; ketones such as acetone; alcohols such as methanol; nitriles such as acetonitrile; vinyl esters such as ethyl acetate; carbonates such as ethylene carbonate; and supercritical carbon dioxide. One kind of these can be used alone, or two or more kinds thereof can be used in combination.

<(Meth)acrylic polymer (P)>

The resin composition according to the present invention may contain a (meth)acrylic polymer (P) different from the (meth)acrylic copolymer (B). The (meth)acrylic polymer (P) can be used as a processing auxiliary agent of the vinyl chloride-based polymer (A1). This processing auxiliary agent is an auxiliary agent that aids the unwinding of the polymer chain of the vinyl chloride-based polymer (A1) during melt kneading, thereby increasing the melt viscosity (accelerating gelation), and it has an effect of making the plasticizer (A2) easily mixed with the (meth)acrylic copolymer

(B). The proportion of the (meth)acrylic polymer (P) in 100 parts by mass of a total of the vinyl chloride-based polymer (A1), the (meth)acrylic copolymer (B), and the plasticizer (A2) is preferably 0.1 parts by mass or more and 20 parts by mass or less, preferably 0.5 parts by mass or more and 10 parts by mass or less, and more preferably 1 part by mass or more and 5 parts by mass or less.

The proportion of the methyl methacrylate unit in 100% by mass of the (meth)acrylic polymer (P) is preferably 30% to 100% by mass and more preferably 50% to 80% by mass. When the proportion of the methyl methacrylate unit contained in the (meth)acrylic polymer (P) is 30% by mass or more, the compatibility between the vinyl chloride-based polymer (A1) and the (meth)acrylic polymer (P) is favorable, and which aids the unwinding of the polymer chain of the vinyl chloride-based polymer (A1), thereby increasing the melt viscosity and allowing the function required as a processing auxiliary agent to be exhibited. When the proportion of the methyl methacrylate unit in 100% by mass of the (meth)acrylic polymer (P) is 100% by mass or less, it is possible to adjust the softening temperature or to improve the resistance to thermal decomposition. That is, when a monomer unit other than methyl methacrylate is subjected to copolymerization with the (meth)acrylic polymer (P), it is possible to achieve a balance between various performances. For example, in a case where an alkyl acrylate such as methyl acrylate, ethyl acrylate, propyl acrylate, or n-butyl acrylate is subjected to copolymerization, the resistance to thermal decomposition of the (meth)acrylic polymer (P) during melt processing is improved, whereby it is possible to prepare a temperature at which the (meth)acrylic copolymer is melted.

Examples of the commercially available product of the (meth)acrylic polymer (P) include acrylic macromolecule processing auxiliary agents, represented by METABLEN P type or the like, manufactured by Mitsubishi Chemical Corporation. Examples of the METABLEN P type include P-531A, P-530A, P-551A, P-550A, P-501A, and P-570A.

The adding amount of the (meth)acrylic polymer (P) is not particularly limited; however, it is preferably 0.1 to 20 parts by mass, more preferably 0.5 to 10 parts by mass, and still more preferably 1 to 5 parts by mass, with respect to the vinyl chloride-based polymer (A1). When the adding amount thereof is set to 0.1 parts by mass or more, a gelation promoting effect during processing is obtained, and when the adding amount thereof is set to 20 parts by mass or less, changes in mechanical properties can be suppressed.

Regarding the timing of adding the (meth)acrylic polymer (P), the (meth)acrylic polymer (P) may be added at the time when a mixture of the vinyl chloride-based polymer (A1) and the plasticizer (A2) is kneaded in advance to prepare a polyvinyl chloride-based resin (A), or may be added at the time when the polyvinyl chloride-based resin (A) and the (meth)acrylic copolymer (B) are kneaded to prepare the resin composition according to the present invention. In addition, a processing auxiliary agent may be added at the time when a mixture containing the vinyl chloride-based polymer (A1), the plasticizer (A2), and the (meth)acrylic copolymer (B) is kneaded to prepare the resin composition according to the present invention. Further, a processing auxiliary agent may be added at the time when a mixture containing the vinyl chloride-based polymer (A1) and the (meth)acrylic copolymer (B) is kneaded, or a processing auxiliary agent may be added at the time when the vinyl chloride-based polymer (A1) and the (meth)acrylic copolymer (B) are kneaded to mix the obtained precursor with the plasticizer (A2). That is, regarding the order of kneading of the vinyl chloride-based polymer (A1), the plasticizer (A2), and the (meth)acrylic copolymer (B), the kneading can be freely combined in consideration of devices to be used, miscibility, compatibility, or the like and a processing auxiliary agent may be added in any of the kneading steps.

<Anti-blocking particle (Q)>

The resin composition according to the present invention may contain anti-blocking particles (Q) as necessary. A part or all of the anti-blocking particles (Q) may be the (meth)acrylic polymer (P) described above.

The anti-blocking particles (Q) are used in order to impart anti-blocking properties to a raw material used in the resin composition according to the present invention, the resin composition according to the present invention, a molding material consisting of the resin composition according to the present invention, and a molded product thereof. In particular, it is preferable to use them for preventing the blocking of pellets, beads, powder, and the like.

Among them, the anti-blocking particles (Q) can be used for the intended purpose of preventing the particles of the (meth)acrylic copolymer (B) from blocking. That is, it is preferable to add the anti-blocking particles (Q) at the time when the (meth)acrylic copolymer (B) is produced by the suspension polymerization method and then recovered as beads. Regarding the timing of adding the anti-blocking particles (Q), the anti-blocking particles (Q) may be added in a state of being a polymer slurry obtained by suspension polymerization or may be added in a step of dehydrating the polymer slurry or in a step of recovering the beads after the dehydration.

The anti-blocking particles (Q) have an effect of preventing blocking by being adsorbed to the surface of the (meth)acrylic copolymer (B). The proportion of the anti-blocking particles (Q) is preferably 0.01 parts by mass or more, more preferably 0.05 parts by mass or more, and still more preferably 0.1 parts by mass or more, with respect to 100 parts by mass of the (meth)acrylic copolymer (B). In addition, the adding amount of the anti-blocking particles (Q) is preferably 50 parts by mass or less, more preferably 30 parts by mass or less, and still more preferably 20 parts by mass or less, with respect to 100 parts by mass of the (meth)acrylic copolymer (B). When the adding amount of the anti-blocking particles (Q) is 0.01 parts by mass or more, the powder has excellent fluidity and thus is handled easily, and when the adding amount thereof is 50 parts by mass or less, the performance of (meth)acrylic copolymer (B) is not inhibited.

Regarding the particle diameters of the anti-blocking particles (Q), a median diameter thereof, which is measured using a particle size distribution analyzer, is preferably 35% or less, more preferably 20% or less, still more preferably 10% or less, and particularly preferably 5% or less of a median diameter of the (meth)acrylic copolymer (B). Regarding the particle diameters of the anti-blocking particles (Q), a median diameter measured using a particle size distribution analyzer is preferably 0.1% or more, more preferably 0.2% or more, still more preferably 0.3% or more, and particularly preferably 0.5% or more of a median diameter of the (meth)acrylic copolymer (B). Regarding the particle diameters of the anti-blocking particles (Q), when a median diameter measured using a particle size distribution analyzer is 35% or less or 0.1% or more of a median diameter of the (meth)acrylic copolymer (B), the powder has excellent fluidity and thus is handled easily. It is noted that the median diameter represents a median value in a case where the data on the particle diameters is lined up in order from the minimum value to the maximum value.

Examples of the anti-blocking particles (Q) include a powder of a (meth)acrylic polymer such as the (meth)acrylic polymer (P), particles consisting of a vinyl chloride-based polymer, and inorganic fine particles such as silica. Among these, a powder of a (meth)acrylic polymer such as the (meth)acrylic polymer (P), or particles consisting of a vinyl chloride-based polymer are suitably used.

Examples of the vinyl chloride-based polymer include fine particles produced by a suspension polymerization method or fine particles produced by an emulsion polymerization method. Among them, the fine particles produced by the emulsion polymerization method have a small particle diameter of 1 to 200 μm and thus are suitable particularly as the anti-blocking particles (Q).

<Other components>

The resin composition according to the present invention may contain other components as necessary. Examples of the other component include a mold release agent, an antioxidant, an impact resistance improver, a flexibility enhancer, a weather resistance improver, a colorant, an inorganic pigment, an organic pigment, carbon black, ferrite, a conductivity imparting agent, an ultraviolet absorber, an infrared absorber, a lubricant, an inorganic filler, a strengthening agent, a reverse plasticizer, a neutralizer, a crosslinking agent, a flame retardant, a preservative, an insect repellent, a fragrance, a radical scavenger, a sound absorbing material, a core shell rubber, and another polymer.

Examples of the lubricant include a pure hydrocarbon-based lubricant such as liquid paraffin, natural paraffin, micro wax, synthetic paraffin, or low molecular weight polyethylene, a halogenated hydrocarbon-based lubricant, a fatty acid-based lubricant such as a higher fatty acid or an oxy fatty acid, a fatty acid amide-based lubricant such as a fatty acid amide or a bis-fatty acid amide, and an ester-based lubricant such as a polyhydric alcohol ester of a fatty acid, such as a lower alcohol ester of a fatty acid or a glyceride, a polyglycol ester of a fatty acid, or a fatty alcohol ester (ester wax) of a fatty acid, as well as a metal soap, a fatty alcohol, a polyhydric alcohol, a polyglycol, a polyglycerol, a partial ester of a fatty acid and a polyhydric alcohol, a partial ester of a fatty acid and a polyglycol or polyglycerol, and a silicone oil. One kind of these can be used, or two or more kinds thereof can be used in combination.

Among the above, it is preferable to use the lubricant since it has an excellent effect of improving moldability. The lubricant is preferably a pure hydrocarbon-based lubricant, a fatty acid amide-based lubricant, or a silicone oil in terms of ease of availability.

The adding amount of the lubricant is not particularly limited; however, it is preferably 0.1 to 15 parts by mass and more preferably 0.1 to 5 parts by mass with respect to 100 parts by mass of the vinyl chloride-based polymer (A1). When the adding amount thereof is set to 0.1 parts by mass or more, it is possible to reduce the adhesion of the resin composition to the molding machine, and when the adding amount thereof is set to 15 parts by mass or less, it is possible to prevent the deterioration of processability.

Examples of the other polymer include (meth)acrylic resins such as PMMA, polyolefin, polystyrene, polyamide, polyurethane, an unsaturated polyester, saturated polyesters such as polyethylene terephthalate and polybutylene terephthalate, polycarbonate, a silicone resin, an epoxy resin, polyether ether ketone, and polyvinylidene fluoride. A thermoplastic resin is preferable as another polymer.

<Production method of resin composition>

The resin composition according to the present invention, which contains a block copolymer containing the vinyl chloride-based polymer (A1), the plasticizer (A2), and the polymer (B1) and the polymer (B2), or contains the (meth)acrylic copolymer (B), which is a graft copolymer, can be produced, for example, by a production method including the following step (I).

[Step (I)] A step of mixing a resin composition containing the vinyl chloride-based polymer (A1) and the

(meth)acrylic copolymer (B) at 150°C or higher.

In addition, the resin composition according to the present invention can also be produced by using, for example, the polyvinyl chloride-based resin (A) containing the vinyl chloride-based polymer (A1) and the plasticizer (A2). The polyvinyl chloride-based resin (A) is a resin composition that contains the vinyl chloride-based polymer (A1) and the plasticizer (A2) but does not contain the (meth)acrylic copolymer (B). The polyvinyl chloride-based resin (A) is prepared in advance and then mixed with the (meth)acrylic copolymer (B), whereby the resin composition according to the present invention can be produced. As another method, the resin composition according to the present invention can be prepared, without using the polyvinyl chloride-based resin (A), from a mixture containing the vinyl chloride-based polymer (A1), the plasticizer (A2), and the (meth)acrylic copolymer (B).

<Another embodiment>

Another embodiment of the resin composition according to the present invention is a resin composition containing the (meth)acrylic copolymer (B) and the anti-blocking particles (Q).

In the present embodiment, the (meth)acrylic copolymer (B) is a block copolymer or a graft copolymer, which contains the polymer (B1) and the polymer (B2), where the polymer (B1) contains a monomer unit (b1) represented by Formula (1).

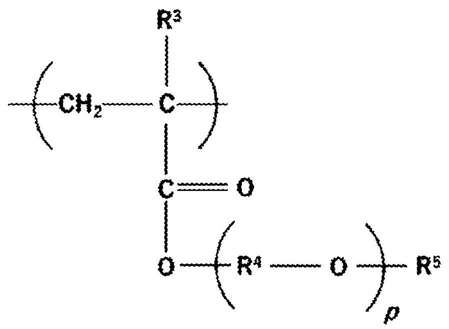

(1)

In Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10.

In the present embodiment, the proportion of the anti-blocking particles (Q) is 0.1 parts by mass or more and 20 parts by mass or less with respect to 100 parts by mass of the (meth)acrylic copolymer (B), and the median diameter of the anti-blocking particles (Q), which is measured using a particle size distribution analyzer, is 35% or less of a median diameter of the (meth)acrylic copolymer (B).

[Molding material]

The resin composition according to the present invention can be used as a molding material. In a case where it is applied to, as a molding method, extrusion molding with a kneading extruder such as a single screw extruder or a twin screw extruder, as well as a generally known molding method, for example, injection molding, hollow molding, or roll processing, various desired molded products can be obtained.

The shape of the molding material is not particularly limited. However, when it is assumed that the molding material is used for melt molding into a molded product, it is preferable that the copolymer, another polymer, and the other component that is blended as necessary are subjected to melt kneading in advance and processed into a pellet shape or a bead shape.

The content of the (meth)acrylic copolymer (B) with respect to the total mass of the molding material is preferably 1% by mass or more, more preferably 3% by mass or more, still more preferably 5% by mass or more, and even still more preferably 7% by mass or more. In addition, the content of the (meth)acrylic copolymer (B) with respect to the total mass of the molding material is preferably 90% by mass or less, more preferably 50% by mass or less, still more preferably 20% by mass or less, and even still more preferably 10% by mass or less. When the content thereof is 1% by mass or more and 90% by mass or less, the protein adhesion suppressing ability is excellent.

In terms of the transparency of the molded article, a haze value measured in accordance with Japanese Industrial Standards JIS K 7136: 2000, by using a test piece having a thickness of 1 mm, which is obtained by molding the resin composition according to the present invention, is preferably 0% or more and 90% or less, more preferably 0% or more and 70% or less, still more preferably 0% or more and 50% or less, and even still more preferably 0% or more and 30%

or less. When the haze value is 90% or less, sufficient transparency is obtained.

For the molding material of the present invention, a general method of producing a polyvinyl chloride-based molding material can be appropriately selected and used. In addition, the production of the molding material and the production of a molded product to be described later may be carried out in different steps or may be carried out continuously.

For the production method of the molding material according to the present invention, a production step for the molding material can be assembled by combining manufacturing devices such as a Henschel mixer, a Banbury mixer, a V-type mixer, a ribbon blender, a planetary mixer, a super mixer, a tumbler, a single screw extruder, a twin screw extruder, a multi screw extruder, a co-kneader, a planetary gear extruder, a plasticator, and a roll kneader.

For the molding material, various packaging methods can be employed for the intended purpose of preventing contamination or adsorption of foreign substances, absorption of unnecessary gas, or the like. For example, contamination of foreign substances can be prevented by using various clean packaging methods. It is possible to impart gas barrier properties to a packaging material by subjecting the packaging material to various kinds of coating.

When producing the molding material, the order of mixing each of the vinyl chloride-based polymer (A1), the plasticizer (A2), and the acrylic copolymer (B), which are contained in the resin composition according to the present invention, is not particularly limited. In addition, the stabilizer (A3), the (meth)acrylic polymer (P), the anti-blocking particles (Q), and other components, which are used as necessary, may be added in any step. Any component can be subjected to divided addition in each step and/or adjustment of a temperature condition at the time of mixing.

Regarding the mixing order, it is preferable to knead the vinyl chloride-based polymer (A1) and the plasticizer (A2) in advance from the viewpoint of workability.

The (meth)acrylic copolymer (B) that is used in the resin composition according to the present invention may be kneaded in advance in another step to be pelletized. In the pelletization, an extruder such as a single screw extruder, a twin screw extruder, or a multi screw extruder is preferably used. In a case where the (meth)acrylic copolymer (B) is pelletized using an extruder, it is preferable to carry out volatilization. For the intended purpose of removing impurities by volatilization, water, alcohol, or the like is added to the (meth)acrylic copolymer (B), which is charged into the extruder, whereby the volatilization efficiency can be increased.

During producing a molding material using the resin composition according to the present invention, each of the vinyl chloride-based polymer (A1), which is a raw material, the plasticizer (A2), the stabilizer (A3), the polyvinyl chloride-based resin (A), the (meth)acrylic copolymer (B), and other components is required to be in an optimum dry state. For example, for the intended purpose of removing impurities during melt kneading, a state of containing water and/or an organic solvent and the like may be introduced. On the contrary, it may be favorable to carry out pre-drying sufficiently for the intended purpose of preventing deterioration during kneading. The moisture amount contained in the raw material is preferably 0.01% to 5%, more preferably 0.5% to 3%, and particularly preferably 1% to 2%. When the moisture amount is 0.1% or more, a decrease in the impurity concentration during kneading is expected, and when the moisture amount thereof is 5% or less, the deterioration of the resin composition can be suppressed.

[Use application of resin composition]

As shown in Examples described later, the resin composition according to the present invention has excellent moldability. In addition, the present resin composition has an effect of suppressing protein adhesion and thus is suitable for the production of an article that comes into contact with proteins. It is particularly suitable for the production of an article that comes in contact with a plasma protein. The resin composition according to the present invention is suitable as a molding material. In a case where a molding material containing the resin composition is molded, an article (a molded product) having an effect of suppressing protein adhesion can be obtained.

The molding material according to the present invention has a protein adhesion suppressing function, and a fibrinogen adhesion amount of 1.5 micrograms (μg) or less per 1 $cm^2$ can be achieved in the following protein adhesion test (2). The fibrinogen adhesion amount is preferably 1.25 μg or less and more preferably 1.10 μg or less.

(Protein adhesion test: μBCA method)

A molding material to be tested is immersed in a fibrinogen (FB) solution of 1 mg/mL obtained by dissolving the fibrinogen in phosphate buffered saline (PBS), at 37°C for 2 hours. After the immersion for 2 hours, the molding material is washed with PBS, immersed in 6 mL of an aqueous sodium dodecyl sulfate solution, and then subjected to ultrasonic washing for 5 minutes. 150 μL of the ultrasonically washed solution is put into a 96-well plate, and 150 μL of a commercially available BCA kit protein quantification reagent is put into a part where the ultrasonically washed solution has been put, followed by being held at 37°C for 2 hours. After being held for 2 hours, the absorbance at 562 nm is measured with a plate reader, and the FB adhesion amount is calculated by applying the measured value to a calibration curve obtained from FB solutions having known concentrations.

[Molded product]

Examples of the shape of the article (the molded product) include a sheet shape, a film shape, a tube shape, and a three-dimensional shape. Further, the surface of the molded product may be a mirror surface, or both surfaces or one surface thereof may be subjected to surface unevenness processing such as embossing or matting. In addition, a protective film, a separator, or the like can be provided on the surface of the molded product. In addition, for the intended purpose of preventing blocking, various powders can be adhered to the surface.

<Production method of molded product>

The method of molding the molding material to produce an article (a molded product) is preferably a melt molding method, and examples thereof include an injection molding method, a compression molding method, a hollow molding method, an extrusion molding method, a rotary molding method, a casting method, and a solvent casting method. Among these, injection molding or extrusion molding is preferable in terms of productivity. The metal mold which forms a shape during the molding using the molding machine, the resin temperature, the molding conditions, and the like are not particularly limited either.

In the production of the molded product, similarly to the case of the production of the molding material, it is preferable to carry out pre-drying of the molding material at a suitable temperature and for a suitable time in order to make the content of the moisture contained in the molding material in a suitable range. In a case where the temperature is low or the time is short, defects such as foaming and/or a poor appearance, which are caused in a case where a molding material containing a volatile component is subjected to melt molding, occur. On the contrary, when the pre-drying temperature is too high or the time is too long, the heat deterioration of the molding material is caused, which may cause the deterioration of physical properties of the molded product and/or the coloring of the molded product.

<Processing using molded product>

The molded product can be adhered or welded to other component parts or can be adhered or welded between sheets, films, or tubes to produce various products. Examples of the welding method for the molded product using the resin composition according to the present invention include ultrasonic welding, vibration welding, high frequency welding, hot plate welding, laser welding, and spin welding. For an adhesion method for the molded product, various adhesives which are, for example, epoxy resin-based, vinyl acetate-based, acrylic resin-based, phenol resin-based, chloroprene rubber-based, nitrile rubber-based, silicone rubber-based, styrene-butadiene rubber-based, and cyanoacrylate-based, can be appropriately selected and used. In addition, solvent adhesion can be applied. Further, tape attaching or adhesion with a tape such as a double-sided tape can be carried out.

When dissimilar materials are adhered to each other, a plurality of adhesion methods can be further combined according to the materials to be subjected to the adhesion methods.

The article (molded product) is preferably an article that comes in contact with a body liquid (blood, a digestive juice, a leachate, or the like) containing proteins, and it is preferably used in a multilayer film for an inner layer that comes in contact with a plasma protein, an antibody drug, or a biopharmaceutical. Examples of the article that comes in contact with a plasma protein include medical instruments such as a scalpel, forceps, a contact lens, a cannula, a catheter, an injection tube, an infusion route, an infusion bag, an infusion solution bag, a blood bag, a stent, and an endoscope; biochemical instruments such as a pipette tip, a petri dish, a cell, a microplate, a storage bag, a plate, a reagent storage container, a tube, and a flask; and cell therapy instrument such as a mixer, a bioreactor, and ajar fermenter. In addition, examples of the article that comes in contact with a protein other than the plasma protein include a petri dish for cell culture, a cell for cell culture, a microplate for cell culture, a bag for cell culture, a plate for cell culture, a tube for cell culture, a flask for cell culture, a petri dish for biopharmaceuticals, a cell for biopharmaceuticals, a microplate for biopharmaceuticals, a plate for biopharmaceuticals, a tube for biopharmaceuticals, a bag for biopharmaceuticals, a container for biopharmaceuticals, a syringe for biopharmaceuticals, a flask for biopharmaceuticals, a petri dish for antibody drug, a cell for antibody drug, a microplate for antibody drug, a plate for antibody drug, a tube for antibody drug, a bag for antibody drug, a container for antibody drug, and a syringe for antibody drug, a flask for antibody drug, blood (whole blood, plasma, platelet, red blood cell) bag, a vial for blood product, a bag for blood product, a shunt tube, an indwelling needle, and a drain.

[Examples]

Hereinafter, the present invention will be described in more detail according to Examples and Comparative Examples of the present invention. However, the present invention is not limited to these examples in any way. It is noted that the "parts" in Examples represents "parts by mass".

[GPC measurement]

The Mw and the Mn were determined using gel permeation chromatography (GPC). The measurement conditions are shown below.

Apparatus: HLC-8220 (manufactured by Tosoh Corporation)
Column: TSK GUARD COLUMN SUPER H-H (4.6 × 35 mm, manufactured by Tosoh Corporation) and two columns of TSK-GEL SUPER HM-H (6.0 × 150 mm, manufactured by Tosoh Corporation), where these columns are connected in series
Eluent: tetrahydrofuran
Measurement temperature: 40°C
Flow rate: 0.6 mL/min

The mass average molecular weight (Mw) and the number average molecular weight (Mn) were calculated by using a calibration curve, which was created using polymethyl methacrylate (four kinds, each having a peak molecular weight (Mp) = 141,500, 55,600, 11,100, and 1,590 manufactured by Polymer Laboratories. The molecular weight distribution was calculated according to the following expression, "molecular weight distribution = (mass average molecular weight)/(number average molecular weight)".

[Transparency evaluation]

A haze value of a test piece having a thickness of 1 mm was measured in accordance with the Japanese Industrial Standards JIS K7136.

[Blocking resistance]

FIG. 1 shows an instrument for preparing a sample for blocking resistance evaluation. 20 g of a specimen was put in a cylindrical case 2 having a bottom lid 1, the specimen was covered with an upper lid 3, a weight 5 of 5 kg was placed thereon through a weight base 4, and the specimen was placed and heated in a gear oven at 50°C for 6 hours together with a sample preparation instrument while being applied with a load of the weight 5 (pressure: 20 $kPa/cm^2$), whereby a block-shaped sample was prepared. After the preparation, the sample was cooled to room temperature, and the sample was placed on a #12 mesh (opening mesh of 1.4 mm) sieve and shaken at a fixed period by using a shaker. A block, which was the sample, was broken by shaking, and the time and the amount of the broken block (the amount of powder on the receiving dish were measured at each fixed time. The time at which 50% of the block (10 g) was broken was defined as the 50% crushing time to evaluate blocking resistance.

<Production Example 1: synthesis of dispersing agent (1)>

A reactor equipped with a stirrer, a cooling pipe, and a thermometer was charged with 61.6 parts of an aqueous solution of 17% by mass potassium hydroxide, 19.1 parts of methyl methacrylate, and 19.3 parts of deionized water. Next, the solution in the reactor was stirred at room temperature, the exothermic peak was checked, and the solution was stirred for 4 hours. Thereafter, the reaction solution in the reactor was cooled to room temperature, thereby obtaining an aqueous potassium methacrylate solution.

Next, a polymerization device equipped with a stirrer, a cooling pipe, and a thermometer was charged with 900 parts of deionized water, 70 parts of an aqueous solution of 42% by mass sodium 2-sulfoethyl methacrylate (product name: ACRYESTER SEM-Na, manufactured by Mitsubishi Chemical Corporation), 16 parts of the potassium methacrylate aqueous solution, and 7 parts of methyl methacrylate, the mixture was stirred, and the liquid in the reactor was heated to 50°C while the air in the polymerization device was substituted with nitrogen. 0.053 parts of V-50 (manufactured by FUJIFILM Wako Pure Chemical Corporation, 2,2'-azobis(2-methylpropionamidine) dihydrochloride, product name) serving as a polymerization initiator was added to the polymerization device, and the liquid in the reactor was heated to 60°C. After the charging of the polymerization initiator, 1.4 parts of methyl methacrylate was dividedly added 5 times (total amount of methyl methacrylate: 7 parts) every 15 minutes. Thereafter, the liquid in the polymerization device was maintained at 60°C for 6 hours while being stirred, and cooled to room temperature, thereby obtaining a dispersing agent (1) having a solid content of 8% by mass, which was a transparent aqueous solution.

<Production Example 2: synthesis of chain transfer agent (1)>

2.00 g (8.03 mmol) of cobalt (II) acetate tetrahydrate (manufactured by FUJIFILM Wako Pure Chemical Corporation, special grade), 3.86 g (16.1 mmol) of diphenylglyoxime (manufactured by Tokyo Chemical Industry Co., Ltd., EP grade), and 100 ml of diethyl ether deoxidized by nitrogen bubbling in advance were added to a synthesizer equipped with a stirrer in a nitrogen atmosphere, and stirred at room temperature for 2 hours. Next, 20 ml of a boron trifluoride diethyl ether complex (manufactured by Tokyo Chemical Industry Co., Ltd., EP grade) was added thereto, and the mixture was further stirred for 6 hours. The obtained mixture was filtered, and the solid was washed with diethyl ether, and dried at 20°C and 100 MPa or less for 12 hours, thereby obtaining 5.02 g (7.93 mmol, yield of 99% by mass) of a chain transfer agent (1) as a brown solid.

<Production Example 3: synthesis of macromonomer (d'-1)>

135 parts of deionized water, 0.1 parts of sodium sulfate ($Na_2SO_4$), and 0.26 parts by mass of the dispersing agent (1) (solid content: 10% by mass) produced in Production Example 1 were added to a polymerization device equipped with a stirrer, a cooling pipe, and a thermometer, and the resultant mixture was stirred to obtain a uniform aqueous solution. Next, 95 parts of methyl methacrylate, 5 parts of methyl acrylate, 0.0010 parts by mass of the chain transfer agent (1) produced in Production Example 2, and 0.1 parts by mass of PEROCTA O (manufactured by NOF Corporation, 1,1,3,3-tetramethylbutyl peroxy-2-ethylhexanoate, product name) as a polymerization initiator were added thereto to obtain an aqueous dispersion liquid.

Next, the air inside the polymerization device was sufficiently substituted with nitrogen, and the aqueous dispersion liquid was heated to 80°C and maintained for 3 hours, and heated to 90°C and maintained for 2 hours. Thereafter, the reaction solution was cooled to 40°C to obtain an aqueous suspension of the macromonomer. The aqueous suspension was filtered through a filter cloth, and the filtrate was washed with deionized water and dried at 40°C for 16 hours to obtain a macromonomer (d'-1). The Mw of the macromonomer (d'-1) was 36,000, and the Mn thereof was 15,000.

<Production Example 4: [(meth)acrylic copolymer (B-1)>

A reactor equipped with a stirrer, a cooling pipe, and a thermometer was charged with 145 parts of deionized water, 0.36 parts of sodium sulfate, 1.25 parts of the dispersing agent (1) produced in Production Example 1, 40 parts of the macromonomer (d'-1) produced in Production Example 3, 60 parts of methoxyethyl acrylate (manufactured by Osaka Organic Chemical Industry Ltd.), and 0.2 parts of n-octyl mercaptan (manufactured by Kanto Chemical Co., Inc., product name), and the resultant mixture was heated to 55°C while being stirred, thereby obtaining a composition in a syrup dispersed state. After cooling the composition to 40°C or lower, 0.12 parts of V601 (manufactured by FUJIFILM Wako Pure Chemical Corporation, dimethyl 2,2'-azobis(2-methylpropionate), product name) was dissolved in the composition to obtain a polymerizable composition in a syrup dispersed state.

Next, the temperature of the syrup dispersion liquid was increased to 75°C and held for 2 hours. Thereafter, the temperature was increased to 85°C and held for 90 minutes.

After cooling to 40°C or lower, the suspension was filtered, and the filtrate was washed with deionized water and dried at 70°C for 12 hours to obtain a (meth)acrylic copolymer (B-1). The Mn of the obtained copolymer was 56,000, and the Mw thereof was 300,000.

<Production Example 5: polyvinyl chloride-based resin (A-1)>

100 parts of TK-1300 (manufactured by Shin-Etsu Chemical Co., Ltd., average degree of polymerization: 1,300, average chlorine content: 57% by mass) as the vinyl chloride-based polymer (A1), 50 parts of DOP (bis(2-ethylhexyl) phthalate, manufactured by J-PLUS Company, Limited) as the plasticizer (A2), 2.0 parts of an epoxidized vegetable oil (ADK STAB O-130P, manufactured by ADEKA Corporation) as the stabilizer (A3), 3.0 parts of a Ca-Zn-based stabilizer (ADK STAB 37, manufactured by ADEKA Corporation) as the stabilizer (A3), and 1.0 part of a lubricant (LOXIOL VPN233, manufactured by Emery Oleochemicals Japan) were supplied to a Henschel mixer and uniformly mixed to obtain the polyvinyl chloride-based resin (A-1).

<Example 1>

A resin composition obtained by mixing 90 parts of the polyvinyl chloride-based resin (A-1) obtained in Production Example 5 and 10 parts of the (meth)acrylic copolymer (B-1) obtained in Production Example 4 was supplied to a 25 mmφ single screw extruder (manufactured by Thermoplastics Co., Ltd., screw rotation speed: 60 rpm) equipped with a T-die (width: 10 cm, gap: 1.0 mm) and subjected to extrusion and film formation at a resin temperature of 170°C. The obtained molded product was subjected to a fibrinogen (FB) adhesion test according to the protein adhesion test (based on the μBCA method). The test results are shown in Table 1.

<Example 2>

The process was carried out in the same manner as in Example 1, except that the using amount of the polyvinyl chloride-based resin (A-1) obtained in Production Example 5 was changed to 80 parts and the using amount of the (meth)acrylic copolymer (B-1) obtained in Production Example 4 was changed to 20 parts, and the results are shown in Table 1.

<Comparative Example 1>

The process was carried out in the same manner as in Example 1, except that the using amount of the polyvinyl chloride-based resin (A-1) obtained in Production Example 5 was changed to 100 parts and the using amount of the (meth)acrylic copolymer (B-1) obtained in Production Example 4 was changed to 0 parts, and the results are shown in Table 1.

<Production Example 6: polyvinyl chloride-based resin (A-2)>

100 parts of TH-2500 (manufactured by TAIYO VINYL CORPORATION) as the vinyl chloride-based polymer (A1), 50 parts of DOP (bis(2-ethylhexyl) phthalate), manufactured by J-PLUS Company, Limited) as the plasticizer (A2), 10.0 parts of an epoxidized vegetable oil (ADK STAB O-130P, manufactured by ADEKA Corporation) as the stabilizer (A3), 2.5 parts of a Ca-Zn-based stabilizer (ADK STAB 37, manufactured by ADEKA Corporation) as the stabilizer (A3), and 1.0 part of ADK STAB SC-2966 (manufactured by ADEKA CORPORATION) as another additive were supplied to a super mixer (manufactured by KAWATA MFG. CO., LTD., high-speed fluid mixer) and uniformly mixed to obtain a polyvinyl chloride-based resin (A-2).

<Production Example 7: polyvinyl chloride-based resin (A-3)>

The process was carried out in the same manner as in Production Example 6, except that 54 parts of DOTP (bis(2-ethylhexyl) terephthalate, manufactured by J-PLUS Company, Limited) as the plasticizer (A2) was used, whereby a polyvinyl chloride-based resin (A-3).

<Production Example 8: polyvinyl chloride-based resin (A-4)>

The process was carried out in the same manner as in Production Example 6, except that 54 parts of DINCH (manufactured by BASF SE) was used as the plasticizer (A2), whereby a polyvinyl chloride-based resin (A-4).

<Example 3>

97 parts of the polyvinyl chloride-based resin (A-2) obtained in Production Example 6 and 3 parts of the (meth)acrylic copolymer (B-1) obtained in Production Example 4 were subjected to hand blending at ordinary temperature, charged into a Banbury mixer, and discharged at 155°C to obtain a resin composition. The obtained resin composition was formed into a roll sheet using a mill roll set at 150°C, which was subsequently pelletized using a sheet pelletizer (manufactured by Horai Co., Ltd.). The obtained pellets were subject to the process in the same manner as in Example 1 to obtain a film-shaped molded product. The obtained molded product was subjected to a fibrinogen (FB) adhesion test according to the protein adhesion test (based on the μBCA method) and transparency evaluation. The test results are shown in Table 2.

<Example 4>

The process was carried out in the same manner as in Example 3, except that the using amount of the polyvinyl chloride-based resin (A-2) obtained in Production Example 6 was changed to 95 parts and the using amount of the (meth)acrylic copolymer (B-1) obtained in Production Example 4 was changed to 5 parts, and the results are shown in Table 2.

<Example 5>

The process was carried out in the same manner as in Example 3, except that the using amount of the polyvinyl chloride-based resin (A-2) obtained in Production Example 6 was changed to 93 parts and the using amount of the (meth)acrylic copolymer (B-1) obtained in Production Example 4 was changed to 7 parts, and the results are shown in

Table 2.

<Example 6>

The process was carried out in the same manner as in Example 3, except that the using amount of the polyvinyl chloride-based resin (A-2) obtained in Production Example 6 was changed to 90 parts and the using amount of the (meth)acrylic copolymer (B-1) obtained in Production Example 4 was changed to 10 parts, and the results are shown in Table 2.

<Example 7>

The process was carried out in the same manner as in Example 3, except that a change was made such that the polyvinyl chloride-based resin (A-3) obtained in Production Example 7 was used instead of the polyvinyl chloride-based resin (A-2) obtained in Production Example 6, and the results are shown in Table 2.

<Example 8>

The process was carried out in the same manner as in Example 7, except that the using amount of the polyvinyl chloride-based resin (A-3) obtained in Production Example 7 was changed to 95 parts and the using amount of the (meth)acrylic copolymer (B-1) obtained in Production Example 4 was changed to 5 parts, and the results are shown in Table 3.

<Example 9>

The process was carried out in the same manner as in Example 7, except that the using amount of the polyvinyl chloride-based resin (A-3) obtained in Production Example 7 was changed to 93 parts and the using amount of the (meth)acrylic copolymer (B-1) obtained in Production Example 4 was changed to 7 parts, and the results are shown in Table 3.

<Example 10>

The process was carried out in the same manner as in Example 7, except that the using amount of the polyvinyl chloride-based resin (A-3) obtained in Production Example 7 was changed to 90 parts and the using amount of the (meth)acrylic copolymer (B-1) obtained in Production Example 4 was changed to 10 parts, and the results are shown in Table 3.

<Example 11>

The process was carried out in the same manner as in Example 3, except that a change was made such that the polyvinyl chloride-based resin (A-4) obtained in Production Example 8 was used instead of the polyvinyl chloride-based resin (A-2) obtained in Production Example 6, and the results are shown in Table 4.

<Example 12>

The process was carried out in the same manner as in Example 11, except that the using amount of the polyvinyl chloride-based resin (A-4) obtained in Production Example 8 was changed to 95 parts and the using amount of the (meth)acrylic copolymer (B-1) obtained in Production Example 4 was changed to 5 parts, and the results are shown in Table 4.

<Example 13>

The process was carried out in the same manner as in Example 11, except that the using amount of the polyvinyl chloride-based resin (A-4) obtained in Production Example 8 was changed to 93 parts and the using amount of the (meth)acrylic copolymer (B-1) obtained in Production Example 4 was changed to 7 parts, and the results are shown in Table 4.

<Example 14>

The process was carried out in the same manner as in Example 11, except that the using amount of the polyvinyl chloride-based resin (A-4) obtained in Production Example 8 was changed to 90 parts and the using amount of the (meth)acrylic copolymer (B-1) obtained in Production Example 4 was changed to 10 parts, and the results are shown in Table 4.

<Comparative Example 2>

The process was carried out in the same manner as in Example 3, except that the using amount of the polyvinyl chloride-based resin (A-2) obtained in Production Example 6 was changed to 100 parts and the using amount of the (meth)acrylic copolymer (B-1) obtained in Production Example 4 was changed to 0 parts, and the results are shown in Table 2.

<Comparative Example 3>

The process was carried out in the same manner as in Comparative Example 2, except that a change was made such that the polyvinyl chloride-based resin (A-3) obtained in Production Example 7 was used instead of the polyvinyl chloride-based resin (A-2) obtained in Production Example 6, and the results are shown in Table 3.

<Comparative Example 4>

The process was carried out in the same manner as in Comparative Example 2, except that a change was made such that the polyvinyl chloride-based resin (A-4) obtained in Production Example 8 was used instead of the polyvinyl chloride-based resin (A-2) obtained in Production Example 6, and the results are shown in Table 4.

<Comparative Example 5>

95 parts of an olefin resin MC638 (manufactured by Mitsubishi Chemical Corporation, product name) and 5 parts of the (meth)acrylic copolymer (B-1) obtained in Production Example 4 were kneaded with a Labo Plastomill at 250°C and 30 rpm for 5 minutes to prepare a molding material. The obtained molding material was molded by a press molding machine manufactured by SHOJI Co., Ltd. The molding conditions were kept at 200°C and 18 MPa for 5 minutes to prepare a molded product having a thickness of 1 mm. The obtained molded product was subjected to a fibrinogen (FB) adhesion test according to the protein adhesion test (based on the μBCA method) and transparency evaluation. The test results are shown in Table 5.

<Comparative Example 6>

The process was carried out in the same manner as in Comparative Example 5, except that the using amount of the olefin resin MC638 was changed to 90 parts and the using amount of the (meth)acrylic copolymer (B-1) obtained in Production Example 4 was changed to 10 parts, and the results are shown in Table 5.

<Comparative Example 7>

The process was carried out in the same manner as in Comparative Example 5, except that the using amount of the olefin resin MC638 was changed to 80 parts and the using amount of the (meth)acrylic copolymer (B-1) obtained in Production Example 4 was changed to 20 parts, and the results are shown in Table 5.

<Comparative Example 8>

The process was carried out in the same manner as in Comparative Example 5, except that the using amount of the olefin resin MC638 was changed to 100 parts and the using amount of the (meth)acrylic copolymer (B-1) obtained in Production Example 4 was changed to 0 parts, and the results are shown in Table 5.

[Table 1]

| | | Example 1 | Example 2 | Comparative Example 1 |
|---|---|---|---|---|
| Molding material (parts by mass) | (Meth)acrylic copolymer <Production Example 4> | 10 | 20 | 0 |
| | Polyvinyl chloride-based resin <Production Example 5> | 90 | 80 | 80 |
| Evaluation | Adsorption rate (with respect to blank) | 42 | 40 | 100 |
| | Transparency (haze) | 67 | 98 | 6 |

[Table 2]

| | | Example 3 | Example 4 | Example 5 | Example 6 | Comparative Example 2 |
|---|---|---|---|---|---|---|
| Molding material (parts by mass) | (Meth)acrylic copolymer <Production Example 4> | 3 | 5 | 7 | 10 | 0 |
| | Polyvinyl chloride-based resin <Production Example 6> | 97 | 95 | 93 | 90 | 100 |
| Evaluation | Adsorption rate (with respect to blank) | 54.8 | 38.5 | 40.0 | 39.3 | 100 |
| | Transparency (haze) | 67 | 98 | 67 | 98 | 6 |

[Table 3]

| | | Example 7 | Example 8 | Example 9 | Example 10 | Comparative Example 3 |
|---|---|---|---|---|---|---|
| Molding material (parts by mass) | (Meth)acrylic copolymer <Production Example 4> | 3 | 5 | 7 | 10 | 0 |
| | Polyvinyl chloride-based resin <Production Example 7> | 97 | 95 | 93 | 90 | 100 |
| Evaluation | Adsorption rate (with respect to blank) | 63.9 | 38.1 | 32.9 | 18.1 | 100 |
| | Transparency (haze) | 22 | 46 | 67 | 88 | 6.7 |

[Table 4]

| | | Example 11 | Example 12 | Example 13 | Example 14 | Comparative Example 4 |
|---|---|---|---|---|---|---|
| Molding material (parts by mass) | (Meth)acrylic copolymer <Production Example 4> | 3 | 5 | 7 | 10 | 0 |
| | Polyvinyl chloride-based resin <Production Example 8> | 97 | 95 | 93 | 90 | 100 |

(continued)

| | | Example 11 | Example 12 | Example 13 | Example 14 | Comparative Example 4 |
|---|---|---|---|---|---|---|
| Evaluation | Adsorption rate (with respect to blank) | 59.6 | 38.5 | 46 | 33.5 | 100 |
| | Transparency (haze) | 16 | 27 | 43 | 67 | 8.4 |

[Table 5]

| | | Comparative Example 5 | Comparative Example 6 | Comparative Example 7 | Comparative Example 8 |
|---|---|---|---|---|---|
| Molding material (parts by mass) | (Meth)acrylic copolymer <Production Example 4> | 5 | 10 | 30 | 0 |
| | Olefin resin <MC638> | 95 | 90 | 70 | 100 |
| Evaluation | Adsorption rate (with respect to blank) | 84.7 | 73.9 | 68.6 | 100 |
| | Transparency (haze) | - | 87 | 91 | 65 |

As shown in the results in Table 1 to Table 5, the molded products obtained from the molding materials of Examples 1 to 14, which contain the resin composition according to the present invention, have an excellent effect of suppressing protein adhesion as compared with the molded products obtained from the molding materials of Comparative Examples 1 to 8, which do not contain the resin composition according to the present invention. Further, Examples 11 to 14 in which DINCH is used as the plasticizer (A2) have a lower haze value as compared with Examples 1 to 10 in which the other plasticizer (A2) is used, and they also have excellent transparency.

<Production Example 10: anti-blocking resin composition (Q-1)>

99.5 parts of the (meth)acrylic copolymer (B-1) obtained in Production Example 4 and 0.5 parts of Ryuron Paste 860 (manufactured by Tosoh Corporation) as anti-blocking particles were supplied to a Henschel mixer and uniformly mixed to obtain an anti-blocking resin composition (Q-1).

<Production Example 11: anti-blocking resin composition (Q-2)>

The process was carried out in the same manner as in Production Example 10, except that the using amount of the (meth)acrylic copolymer (B-1) obtained in Production Example 4 was changed to 99 parts and the using amount of Ryuron Paste 860 was changed to 1 part, whereby an anti-blocking resin composition (Q-2) was obtained.

<Production Example 12: anti-blocking resin composition (Q-3)>

The process was carried out in the same manner as in Production Example 10, except that the using amount of the (meth)acrylic copolymer (B-1) obtained in Production Example 4 was changed to 98 parts and the using amount of Ryuron Paste 860 was changed to 2 parts, whereby an anti-blocking resin composition (Q-3) was obtained.

<Production Example 13: anti-blocking resin composition (Q-4)>

The process was carried out in the same manner as in Production Example 10, except that a change was made such that the using amount of the (meth)acrylic copolymer (B-1) obtained in Production Example 4 was 90 parts and 10 parts of METABLEN P530A (manufactured by Mitsubishi Chemical Corporation) was used as anti-blocking particles, whereby an anti-blocking resin composition (Q-4) was obtained.

<Production Example 14: anti-blocking resin composition (Q-5)>

The process was carried out in the same manner as in Production Example 10, except that a change was made such that the using amount of the (meth)acrylic copolymer (B-1) obtained in Production Example 4 was 80 parts and 20 parts of METABLEN P530A (manufactured by Mitsubishi Chemical Corporation) was used as anti-blocking particles, whereby an anti-blocking resin composition (Q-5) was obtained.

<Example 15>

Using the anti-blocking resin composition (Q-1) obtained in Production Example 10, an evaluation of blocking properties was carried out, and the results are shown in Table 6.

<Example 16>

Using the anti-blocking resin composition (Q-2) obtained in Production Example 11, an evaluation of blocking properties was carried out, and the results are shown in Table 6.

<Example 17>

Using the anti-blocking resin composition (Q-3) obtained in Production Example 12, an evaluation of blocking properties was carried out, and the results are shown in Table 6.

<Example 18>

Using the anti-blocking resin composition (Q-4) obtained in Production Example 13, an evaluation of blocking properties was carried out, and the results are shown in Table 6.

<Example 19>

Using the anti-blocking resin composition (Q-5) obtained in Production Example 14, an evaluation of blocking properties was carried out, and the results are shown in Table 6.

<Comparative Example 9>

Using the (meth)acrylic copolymer (B-1) obtained in Production Example 4, an evaluation of blocking properties was carried out, and the results are shown in Table 6.

[Table 6]

| | | Median diameter [μm] | Example 15 | Example 16 | Example 17 | Example 18 | Example 19 | Comparative Example 9 |
|---|---|---|---|---|---|---|---|---|
| | | | Q-1 | Q-2 | Q-3 | Q-4 | Q-5 | |
| Anti-blocking resin composition (parts by mass) | (Meth)acrylic copolymer <Production Example 4> | 560 | 99.5 | 99 | 98 | 90 | 80 | 100 |
| | Ryuron Paste 860 | 21 | 0.5 | 1 | 2 | 0 | 0 | 0 |
| | METABLEN P530A | 195 | 0 | 0 | 0 | 10 | 20 | 0 |
| Evaluation | Blocking properties [sec] | - | 23 | 6 | 1 | 180 | 12 | 1020 |

As shown in the results in Table 6, the resin compositions obtained from Examples 15 to 19, which contain the anti-blocking particles according to the present invention have excellent blocking properties as compared with the resin composition of Comparative Example 9, which does not contain the resin composition according to the present invention.

[Industrial Applicability]

The resin composition according to the present invention can provide a protein adhesion suppressor to a molded product.

The resin composition according to the present invention is suitable for producing an article that comes into contact with a body fluid (blood, a digestive juice, a leachate, or the like) containing proteins.

For example, it is suitable for producing medical instruments such as a scalpel, a forceps, a contact lens, a cannula, a catheter, an injection tube, an injection needle, an infusion route, an infusion needle, an infusion bag, a blood bag, gauze, a stent, and an endoscope; and articles that come in contact with a body fluid, a plasma protein, or blood, such as a pipette tip, a petri dish, a cell, a microplate, a storage bag, a plate, a reagent storage container, a tube, a shunt tube, an indwelling needle, a drain.

1: Bottom lid
2: Case
3: Upper lid
4: Weight base
5: Weight

## Claims

1. A resin composition comprising:

    a vinyl chloride-based polymer (Al);
    a plasticizer (A2); and
    a (meth)acrylic copolymer (B),
    wherein the (meth)acrylic copolymer (B) is a block copolymer or a graft copolymer, which contains a monomer unit (b1) represented by Formula (1),

    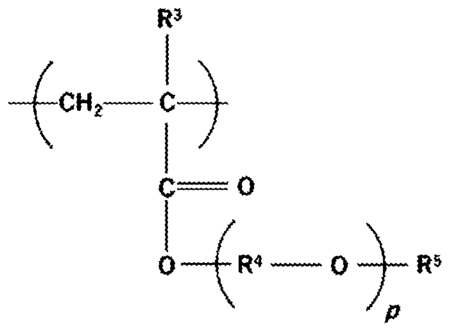

    (1)

    (in Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10).

2. The resin composition according to Claim 1,
wherein a proportion of the (meth)acrylic copolymer (B) in 100% by mass of a total of the resin composition is 20% by mass or less.

3. The resin composition according to Claim 1,
wherein a proportion of the (meth)acrylic copolymer (B) in 100% by mass of a total of the resin composition is 10% by mass or less.

**4.** The resin composition according to Claim 1,
wherein the (meth)acrylic copolymer (B) is a block copolymer or a graft copolymer, which contains a polymer (B1) and a polymer (B2).

**5.** The resin composition according to Claim 4,
wherein a proportion of the monomer unit (b1) in a 100% by mass of a total of monomer units contained in the polymer (B1) is 70% by mass or more.

**6.** The resin composition according to Claim 4,
wherein a proportion of the monomer unit (b1) in a 100% by mass of a total of monomer units contained in the polymer (B1) is 90% by mass or more.

**7.** The resin composition according to Claim 1,
wherein the monomer unit (b1) is a monomer unit derived from at least one monomer selected from the group consisting of methoxymethyl acrylate, methoxyethyl acrylate, methoxypropyl acrylate, methoxybutyl acrylate, methoxy polyethylene glycol acrylate, methoxymethyl methacrylate, methoxyethyl methacrylate, methoxypropyl methacrylate, methoxybutyl methacrylate, and methoxy polyethylene glycol methacrylate.

**8.** The resin composition according to Claim 4,
wherein a glass transition point (Tg) of the polymer (B2) is 50°C to 150°C.

**9.** The resin composition according to Claim 4,

wherein the polymer (B2) consists of a monomer unit (b2), and
the monomer unit (b2) is a monomer unit derived from at least one monomer selected from the group consisting of hydrocarbon group-containing (meth)acrylates in which a hydrocarbon group has 1 to 12 carbon atoms.

**10.** The resin composition according to Claim 4,

wherein the polymer (B2) consists of a monomer unit (b2), and
the monomer unit (b2) includes a monomer unit derived from methyl methacrylate.

**11.** The resin composition according to Claim 4,

wherein the polymer (B2) contains a unit derived from a macromonomer represented by Formula (2),

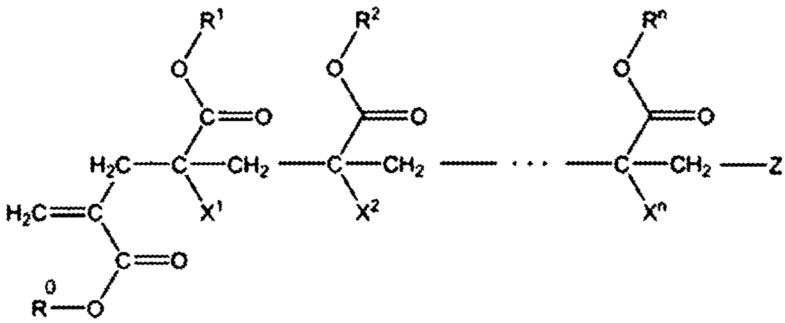

(2)

(in Formula (2), $R^0$ to $R^n$ each independently represent a hydrogen atom, an alkyl group which is unsubstituted or has a substituent, an alicyclic group which is unsubstituted or has a substituent, an aryl group which is unsubstituted or has a substituent, a heteroaryl group which is unsubstituted or has a substituent, or a nonaromatic heterocyclic group which is unsubstituted or has a substituent, where a plurality of $R^0$ to $R^n$ may be the same or different from each other, $X^1$ to $X^n$ represent a hydrogen atom or a methyl group, where a plurality of $X^1$ to $X^n$ may be the same or different from each other, Z is a terminal group, and n is a natural number of 2 to 10,000).

**12.** The resin composition according to Claim 1,

wherein the plasticizer (A2) is at least one selected from the group consisting of a phthalic acid-based compound, a terephthalic acid-based compound, a trimellitic acid-based compound, a cyclohexanedicarboxylic acid ester-based compound, a phosphoric acid-based compound, an adipic acid-based compound, a citric acid-based compound, an ether-based compound, and a polyester-based compound.

**13.** The resin composition according to Claim 1,
wherein the plasticizer (A2) is at least one selected from the group consisting of bis(2-ethylhexyl) phthalate, bis(2-ethylhexyl) terephthalate, tris(2-ethylhexyl) trimellitate, and diisononyl cyclohexane-1,2-dicarboxylate.

**14.** The resin composition according to Claim 1,
wherein the plasticizer (A2) includes diisononyl cyclohexane-1,2-dicarboxylate.

**15.** The resin composition according to Claim 1, further comprising:

a stabilizer (A3),
wherein the stabilizer (A3) is at least one selected from the group consisting of a calcium-zinc-based stabilizer and an epoxidized vegetable oil.

**16.** The resin composition according to Claim 1,
wherein a haze value of a 1 mm thick sheet, which is measured in accordance with Japanese Industrial Standards JIS K 7136: 2000, is less than 50%.

**17.** The resin composition according to Claim 1, further comprising:

a (meth)acrylic polymer (P) different from the (meth)acrylic copolymer (B),
wherein a proportion of the (meth)acrylic polymer (P) with respect to 100 parts by mass of a total of the vinyl chloride-based polymer (A1), the (meth)acrylic copolymer (B), and the plasticizer (A2) is 0.1 to 20 parts by mass,
a content of a methyl methacrylate unit in 100% by mass of a total of the (meth)acrylic polymer (P) is 50% by mass or more, and
a mass average molecular weight of the (meth)acrylic polymer (P) is 100,000 or more.

**18.** The resin composition according to Claim 1, further comprising:

anti-blocking particles (Q),
wherein a proportion of the anti-blocking particles (Q) with respect to 100 parts by mass of the (meth)acrylic copolymer (B) is 0.1 parts by mass or more and 20 parts by mass or less, and
a median diameter of the anti-blocking particles (Q), which is measured using a particle size distribution analyzer, is 35% or less of a median diameter of the (meth)acrylic copolymer (B).

**19.** A resin composition comprising:

a (meth)acrylic copolymer (B); and
anti-blocking particles (Q),
wherein the (meth)acrylic copolymer (B) is a block copolymer or a graft copolymer, which contains a polymer (B1) and a polymer (B2), where the polymer (B1) contains a monomer unit (b1) represented by Formula (1),
a proportion of the anti-blocking particles (Q) is 0.1 parts by mass or more and 20 parts by mass or less with respect to 100 parts by mass of the (meth)acrylic copolymer (B), and
a median diameter of the anti-blocking particles (Q), which is measured using a particle size distribution analyzer, is 35% or less of a median diameter of the (meth)acrylic copolymer (B),

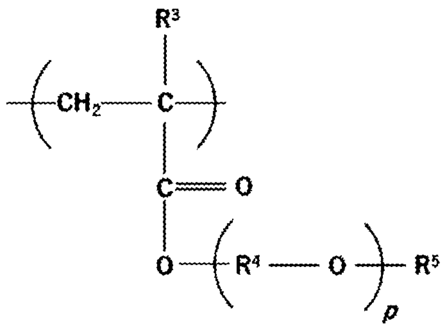

(1)

(in Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10).

**20.** A production method of a resin composition containing a vinyl chloride-based polymer (A1), a plasticizer (A2), and a (meth)acrylic copolymer (B),

wherein the (meth)acrylic copolymer (B) is a block copolymer or a graft copolymer, which contains a polymer (B1) and a polymer (B2), and
the polymer (B1) contains a monomer unit (b1) represented by Formula (1),

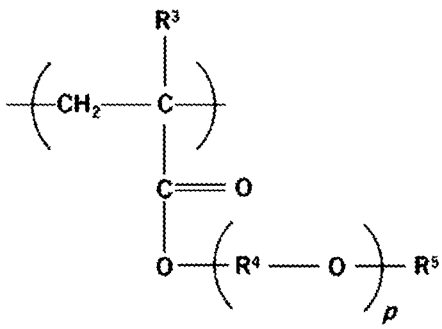

(1)

(in Formula (1), $R^3$ represents a hydrogen atom or a methyl group, $R^4$ represents an alkylene group having 1 to 4 carbon atoms, $R^5$ represents a hydrocarbon group having 1 to 6 carbon atoms, and p represents a natural number of 1 to 10).

**21.** The production method of a resin composition according to Claim 20, comprising:

the following step (I),
[Step (1)]
a step of mixing a resin composition containing the vinyl chloride-based polymer (A1) and the (meth)acrylic copolymer (B) at 150°C or higher.

**22.** A molding material comprising:
the resin composition according to any one of Claims 1 to 19.

**23.** An article obtained by molding the molding material according to Claim 22.

**24.** The article according to Claim 23,
wherein the article comes in contact with a plasma protein.

FIG. 1

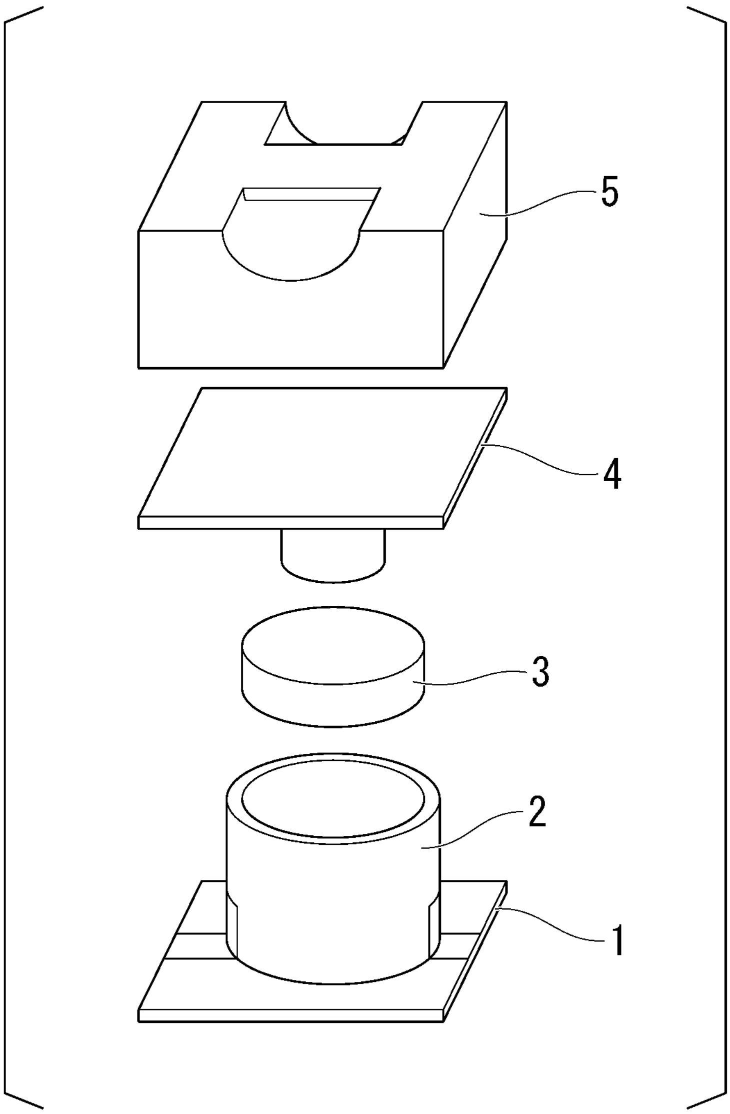

## INTERNATIONAL SEARCH REPORT

International application No.
**PCT/JP2022/039414**

**A. CLASSIFICATION OF SUBJECT MATTER**

***C08L 27/06***(2006.01)i; ***A61L 33/06***(2006.01)i; ***C08F 265/06***(2006.01)i; ***C08L 51/00***(2006.01)i; ***C08L 53/00***(2006.01)i
FI: C08L27/06; C08L51/00; C08L53/00; A61L33/06 100; A61L33/06 200; C08F265/06

According to International Patent Classification (IPC) or to both national classification and IPC

**B. FIELDS SEARCHED**

Minimum documentation searched (classification system followed by classification symbols)

C08L27/06; A61L33/06; C08F265/06; C08L51/00; C08L53/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2014/046158 A1 (TOYOBO CO., LTD.) 27 March 2014 (2014-03-27) claims, paragraphs [0001], [0054]-[0065], [0067]-[0068], examples 1-12, comparative examples 2-5 | 1-4, 7-10, 12-24 |
| A | | 5-6, 11 |
| Y | JP 50-88176 A (KURARAY CO) 15 July 1975 (1975-07-15) claims, p. 1, lower right column, lines 4-14, p. 1, lower right column, line 20 to p. 2, upper left column, line 10, p. 2, lower right column, lines 7-10, examples 1, 2, table 1, sample no. 2, 3 | 1-2, 4-10, 12-24 |
| A | | 3, 11 |
| Y | JP 4-152952 A (TERUMO CORP) 26 May 1992 (1992-05-26) p. 2, upper left column, line 11 to p. 3, upper left column, line 2 | 1-10, 12-24 |
| A | | 11 |
| Y | JP 2-209150 A (SEKISUI CHEMICAL CO LTD) 20 August 1990 (1990-08-20) claims, p. 4, lower left column, line 19 to lower right column, line 18 | 15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 December 2022** | **27 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/039414**

**C. DOCUMENTS CONSIDERED TO BE RELEVANT**

| Category* | Citation of document, with indication, where appropriate, of the relevant passages | Relevant to claim No. |
|---|---|---|
| Y | JP 9-51941 A (SUMITOMO BAKELITE CO LTD) 25 February 1997 (1997-02-25) claims, paragraphs [0013], [0015] | 18-19 |

Form PCT/ISA/210 (second sheet) (January 2015)

**INTERNATIONAL SEARCH REPORT**
**Information on patent family members**

International application No.
**PCT/JP2022/039414**

| Patent document cited in search report | Publication date (day/month/year) | Patent family member(s) | Publication date (day/month/year) |
|---|---|---|---|
| WO 2014/046158 A1 | 27 March 2014 | US 2015/0190551 A1<br>claims, paragraphs [0001], [0079]-[0102], [0105]-[0108], examples 1-12, comparative examples 2-5<br>EP 2898905 A1 | |
| JP 50-88176 A | 15 July 1975 | (Family: none) | |
| JP 4-152952 A | 26 May 1992 | (Family: none) | |
| JP 2-209150 A | 20 August 1990 | (Family: none) | |
| JP 9-51941 A | 25 February 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021173458 A
- JP 2022151815 A
- JP 2004161954 A
- JP 2013121430 A
- US 4680352 A
- WO 8804304 A
- JP 60133007 A
- US 5147952 A
- JP H06298921 A
- JP H11240854 A
- JP 3587530 B
- JP H623209 A
- JP H735411 A
- US 45269945 B
- US 4694054 A
- US 4834326 A
- US 4886861 A
- US 5324879 A
- WO 9517435 A
- JP H9510499 B


### Non-patent literature cited in the description


- **J. BRANDRUP.** Polymer Handbook. Interscience, 1989